(19) Europäisches Patentamt
European Patent Office
Office européen des brevets

(11) **EP 2 077 663 A1**

(12) **EUROPEAN PATENT APPLICATION**
published in accordance with Art. 153(4) EPC

(43) Date of publication:
**08.07.2009 Bulletin 2009/28**

(51) Int Cl.:
*H04N 7/01* (2006.01)  *G09G 3/20* (2006.01)
*G09G 3/36* (2006.01)  *G09G 5/00* (2006.01)
*G09G 5/391* (2006.01)  *H04N 5/66* (2006.01)

(21) Application number: **07708032.3**

(22) Date of filing: **05.02.2007**

(86) International application number:
**PCT/JP2007/051914**

(87) International publication number:
**WO 2008/038419 (03.04.2008 Gazette 2008/14)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.09.2006 JP 2006264034**
**01.12.2006 JP 2006325139**

(71) Applicant: **Sharp Kabushiki Kaisha**
**Osaka-shi, Osaka 545-8522 (JP)**

(72) Inventors:
• **YAMAMOTO, Kenichiroh**
**Chiba-shi, Chiba 266-0005 (JP)**

• **FURUKAWA, Hiroyuki**
**Iga-shi, Mie 518-0032 (JP)**
• **UENO, Masafumi**
**Ikoma-shi, Nara 630-0243 (JP)**
• **YOSHIDA, Yasuhiro**
**Nara-shi, Nara 631-0837 (JP)**

(74) Representative: **Müller - Hoffmann & Partner Patentanwälte**
**Innere Wiener Strasse 17**
**81667 München (DE)**

(54) **IMAGE DISPLAY DEVICE AND METHOD, AND IMAGE PROCESSING DEVICE AND METHOD**

(57)    In an image displaying device that includes a frame rate converting (FRC) portion, deterioration in image quality particularly of a telop part is prevented. The FRC portion 100 includes a motion vector detecting portion 101 and an interpolation frame generating portion 102. The motion vector detecting portion 101 includes a frame delaying portion 1 for delaying an input signal by one frame, an initial displacement vector selecting portion 2 for selecting and outputting an initial displacement vector used for vector detection, a motion vector calculating portion 3 for detecting a motion vector using the initial displacement vector, a vector memory 4 for storing a vector detection result, and a telop information detecting portion 5 for detecting an area where one or more telops exist and a moving speed thereof using a vector detection result in a previous frame supplied from the vector memory 4. The detection result from the telop information detecting portion 5 is reflected in processing in the initial displacement vector selecting portion 2 and/or the motion vector calculating portion 3 to improve accuracy of detecting a vector of a telop part.

FIG. 4

**Description**

TECHNICAL FIELD

The present invention relates to an image displaying device having a function for converting a frame rate or a field rate and a method thereof, and an image processing device and a method thereof, and particularly to an image displaying device for preventing deterioration in image quality of a telop part, and a image displaying method using the device, and an image processing device and an image processing method using the device.

BACKGROUND OF THE INVENTION

As compared to a CRT (Cathode Ray Tube) that has been mainly used for the purpose of realizing a moving image conventionally, an LCD (Liquid Crystal Display) has a drawback, that is, a motion blur, that when displaying an image in motion, outline of a moving part is perceived by a viewer in a blurred state. It is pointed out that the motion blur is caused by a display system itself of the LCD (see, for example, Specification of Japanese Patent No. 3295437; "Examination of moving image quality of hold emitting type display on eight speed CRT", Shuichi Ishiguro and Taiichiro Kurita, Technical report of The Institute of Electronics, Information and Communication Engineers, EID 96-4 (1996-06), p. 19-26).

In the CRT in which an electron beam is scanned and a phosphor is caused to emit light to perform display, light emission of each pixel is almost an impulse although slight afterglow of the phosphor exists. This is called an impulse-type display system. On the other hand, in the case of LCD, an electric charge is accumulated by application of an electric field to a liquid crystal and is retained at a relatively high rate until an electric field is applied next time. Particularly, in the case of a TFT system, a TFT switch is provided for each dot that constitutes a pixel, and generally, auxiliary capacitance is further provided for each pixel, thus the capability of retaining accumulated charge is extremely high. Accordingly, light is continuously emitted until a pixel is rewritten by application of an electric field based on image information of a next frame or field (hereinafter, represented by a frame). This is called a hold-type display system.

In the hold-type display system as described above, since impulse response of image display light has a temporal spread, time-frequency characteristics are worsened with the deterioration of space-frequency characteristics accompanied and, therefore, a motion blur occurs. That is, since the human eyes smoothly follow a moving object, when the light emission time is long like in the case of the hold type, motion of an image looks jerky and unnatural due to a time integration effect.

A technology is known, that an image is interpolated between frames to convert a frame rate (the number of frames), in order to improve the motion blur in the above-described hold-type display system. This technology is called FRC (Frame Rate Converter) and is put into practical use in a liquid crystal display device and the like.

Conventionally, as a method for converting a frame rate, there are various methods such as simply repeating read-out of the same frame for a plurality of times, and interpolating a frame by straight-line interpolation between frames (linear interpolation) (see, for example, "television system conversion", Tatsuro Yamauchi, Journal of the Institute of Television Engineers of Japan, Vol. 45, No. 12, pp. 1534-1543 (1991)). However, in the case of frame interpolation processing by linear interpolation, unnaturalness (jerkiness, judder) accompanying frame rate conversion occurs and the motion blur interference caused by the above-described hold-type display system can not be sufficiently improved, and therefore, it is impossible to achieve sufficient image quality.

Hence, in order to improve quality of a moving image by eliminating influence of the above-described jerkiness and the like, motion compensation processing using a motion vector is proposed. According to the motion compensation processing, a moving image itself is captured to perform motion compensation, thus making it possible to obtain a highly natural moving image without deteriorating resolution or generating the jerkiness. Further, since an interpolation image signal is formed with motion compensated, it is possible to sufficiently improve the motion blur interference caused by the above-described hold-type display system.

In the Specification of the above-described Japanese Patent No. 3295437, a technology is disclosed, that by generating an interpolation frame motion-adaptively, a frame frequency of a display image is increased to improve deterioration in space frequency characteristics that causes a motion blur. In this technology, at least one interpolation image signal that is interpolated between frames of the display image is formed motion-adaptively from precedent and subsequent frames so that the formed interpolation image signal is interpolated between frames and displayed sequentially.

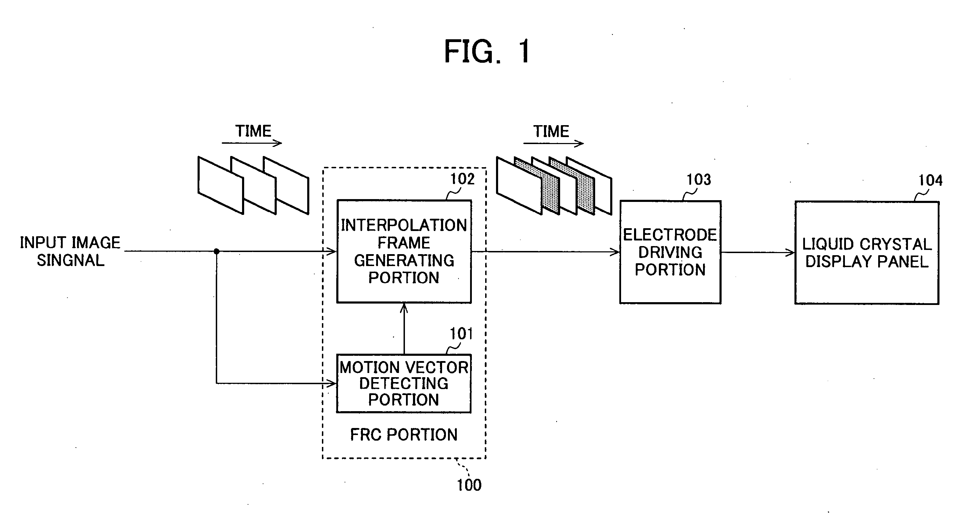

Fig. 1 is a block diagram showing the schematic structure of an FRC driving display circuit in a conventional liquid crystal display device, and in the figure, the FRC driving display circuit is constituted by including an FRC portion 100 for interpolating an image signal which motion compensation processing is executed between frames of an input image signal to convert the number of frames of the input image signal, an active-matrix liquid crystal display panel 104 that has a liquid crystal layer and an electrode for applying a scanning signal and a data signal to the liquid crystal layer, and an electrode driving portion 103 for driving a scanning electrode and a data electrode of the liquid crystal display panel 104 based on an image signal which frame rate conversion is performed by the FRC portion 100.

The FRC portion 100 includes a motion vector detecting portion 101 for detecting motion vector information from an input image signal, and an interpolation frame generating portion 102 for generating an interpolation frame based on the motion vector information obtained by the motion vector detecting portion 101.

In the above-described structure, the motion vector detecting portion 101 may obtain motion vector information, for example, using a block matching method or a gradient method, which will be described below, or when motion vector information is included in an input image signal in some way, this may be used. For example, since image data that is compressively encoded using an MPEG system includes motion vector information of a moving image calculated in encoding, and the structure to acquire the motion vector information may be employed.

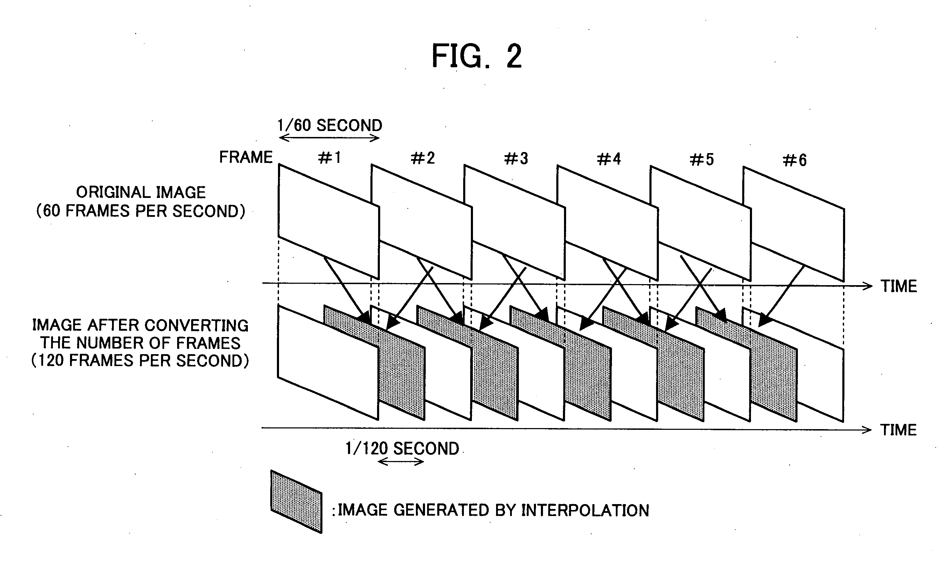

Fig. 2 is a view illustrating frame rate conversion processing by the conventional FRC driving display circuit shown in Fig. 1. The FRC portion 100 generates interpolation frames (images colored in gray in the figure) between frames by motion compensation using motion vector information output by the motion vector detecting portion 101, and sequentially outputs the generated interpolation frame signal with an input frame signal, and thereby, performs processing of converting a frame rate of an input image signal, for example, from 60 frames per second (60 Hz) into 120 frames per second (120 Hz).

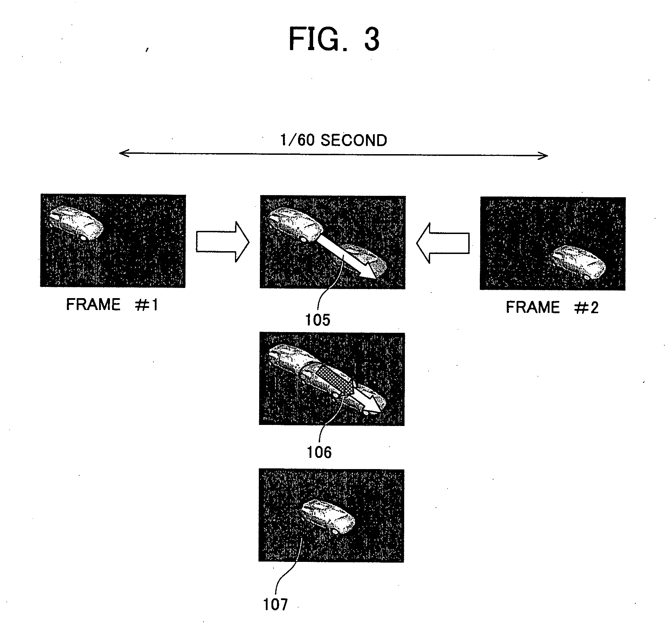

Fig. 3 is a view illustrating interpolation frame generation processing by the motion vector detecting portion 101 and the interpolation frame generating portion 102. The motion vector detecting portion 101 detects a motion vector 105, for example, from a frame #1 and a frame #2 shown in Fig. 3 with a gradient method or the like. That is, the motion vector detecting portion 101 measures a direction and an amount of motion in 1/60 seconds between the frame #1 and the frame #2 to obtain the motion vector 105. Next, the interpolation frame generating portion 102 uses the obtained motion vector 105 to assign an interpolation vector 106 between the frame #1 and the frame #2. By moving an object (here, an automobile) from a position of the frame #1 to a position after the elapse of 1/120 second based on the interpolation vector 106, an interpolation frame 107 is generated.

In this way, by performing motion compensation frame interpolation processing using motion vector information to increase a display frame frequency, a display state of LCD (hold-type display system) can be put close to a display state of CRT (impulse-type display system), and it becomes possible to improve deterioration in image quality due to a motion blur caused when displaying a moving image.

Here, in the above-described motion compensation frame interpolation processing, it is essential to detect a motion vector for motion compensation. As the method for detecting a motion vector, for example, a pattern matching method described in "a method for detecting motion of a television image" shown in Japanese Laid-Open Patent Publication No. 55-162683, "a method for asymptotically detecting an image motion vector" shown in Japanese Laid-Open Patent Publication No. 55-162684, and the like, or an iterative gradient method described in "an image motion amount detecting system" shown in Japanese Laid-Open Patent Publication No. 60-158786, "an initial displacement system in estimation of motion of a moving image" shown in Japanese Laid-Open Patent Publication No. 62-206980" are proposed, respectively.

Particularly, the motion vector detecting system by the latter iterative gradient method is smaller and is capable of detecting a motion vector more accurately than the pattern matching method. That is, in the method for detecting a motion vector by the iterative gradient method, each frame of digitized television signals is subdivided into blocks of a predetermined fixed size, for example, with m by n pixels including m pixels in a lateral direction and n lines in a vertical direction, and based on a gradient of a signal in the screen and physical response of a signal differential value between the corresponding screens, iterative gradient method calculation is applied for each block to estimate a motion amount.

Meanwhile, a moving image has high correlation between frames, and has continuity in a time axis direction. A pixel or a block moving in a certain frame is moved with a similar motion amount also in subsequent frames or previous frames in many cases. For example, in the case of a moving image in which a state that a ball rolls from right to left in a screen is photographed, an area of the ball is moved while having a similar motion amount in any frame. That is, between continuous frames, a motion vector has continuity in many cases.

Accordingly, by referring to a detection result of a motion vector in a previous frame, it is possible to detect a motion vector in a subsequent frame more easily or more accurately. Japanese Laid-Open Patent Publication No. 62-206980 proposes a method that as an initial value in estimation of a motion amount, from candidates of motion vectors that have been already detected in a plurality of surrounding blocks including a block corresponding to a block to be detected, one optimum for detection of a motion vector of the block to be detected is selected as an initial displacement vector, and gradient method calculation is started from a value close to a true motion vector of the block to be detected, so that the number of times of calculation of the gradient method calculation is reduced and a true motion vector is detected, for example, with two-time gradient method calculation.

Moreover, a "motion vector detecting circuit" shown in Japanese Laid-Open Patent Publication No. 06-217266 proposes a method that, in order to further enhance accuracy of detection of a motion vector, an initial displacement vector of motion between each block of image signals spaced by at least one field or more or one frame or more is detected. In addition, also in the block matching method, it is considered to detect a motion vector efficiently by changing a search order referring to a detection result of a motion vector in a pervious frame. In this way, when detecting a motion vector, by using an already-detected motion vector, for example, it is possible to perform frame rate conversion in real time.

Meanwhile, in a television program and a movie, there are not a few cases that a subtitle, namely, a telop is included in an image signal. Among them, there is also a telop in which characters are scrolled (moved) in a horizontal or vertical direction on a screen. According to Fuj ine, et.al., "Real-Life In-Home Viewing Conditions for FPDs and Statistical Characteristics of Broadcast Video", Digest AM-FPD' 06, a moving speed of an object included in a general television program is mainly distributed to not more than 20 deg/sec, among them, frequency of not more than 10 deg/sec is high, while a scroll speed of a telop in a television program is 13.8 deg/sec on average and 35.9 deg/sec at maximum, which shows that an appearance frequency of a telop of 10 to 20 deg/sec is high. That is, a scrolling telop is moved at a speed faster than a general object in a television program in many cases.

DISCLOSURE OF THE INVENTION

PROBLEMS TO BE SOLVED BY THE INVENTION

Generally, in a moving image, the faster an object moves, the larger a change between frames is, and it is difficult to estimate a motion vector accurately. That is, in FRC, as a moving speed of an object becomes faster, it is difficult to generate an interpolation image accurately. As described above, since a telop used in a television program is moved at a speed faster than a general object in many cases, it can be said that a telop is an object for which it is difficult to generate an interpolation image accurately.

Moreover, generally, an object photographed by a camera includes a blur (camera blur) caused by a light accumulating time of the camera when its moving speed is fast. In an image originally including a blur in this way, a motion blur caused by a hold-type display system is hardly conspicuous. Further, in the case of performing FRC, even when detection of a motion vector is failed and failure occurs in an interpolation image, the failure is hardly conspicuous. Whereas, since a telop is one that is synthesized with an image later, a camera blur or the like is not included even when its moving speed is fast. Thus, while a motion blur caused by a hold-type display system tends to be conspicuous and FRC functions effectively, when detection of a motion vector in FRC is failed and a failure occurs in an interpolation image of a telop part, the failure tends to be conspicuous.

In addition, since a viewer tries to read contents of a telop, the viewer chases the scrolling telop with eyes carefully. Accordingly, when detection of a motion vector in FRC is failed and a failure of an interpolation image appears in a telop part, there is a problem that deterioration in image quality tends to be conspicuous for the viewer.

The present invention has been made in view of the above-described subject, and aims to provide an image displaying device capable of preventing deterioration in image quality of a telop part caused by frame rate conversion (FRC) processing of a motion compensation type and a method thereof, and an image processing device and a method thereof.

MEANS FOR SOLVING THE PROBLEMS

A first invention of the present application is an image displaying device having rate converting means that converts and outputs the number of frames or fields of the input image signal to a display panel by interpolating an image signal which motion compensation processing has been executed between frames or fields of an input image signal, wherein a detecting means for detecting feature amount (s) of one or more telops included in the input image signal is provided and the motion compensation processing in the rate converting means is controlled based on the detected feature amount(s) of one or more telops.

A second invention of the present application is the image displaying device, wherein the feature amount (s) of one or more telops is the area(s) of one or more telops moving in a predetermined direction.

A third invention of the present application is the image displaying device, wherein the detecting means divides a screen into a plurality of areas, obtains an average deviation of an average vector for each area, and detects an area in which a distance between the average vector for each area and an average vector of an entire screen is larger than the threshold which is obtained by multiplying the average deviation by a predetermined coefficient as a telop area.

A fourth invention of the present application is the image displaying device, wherein different motion compensation processing is performed for the detected telop area and for other areas.

A fifth invention of the present application is the image displaying device, wherein motion compensation processing is performed only for the detected area(s) of one or more telops and not for other areas.

A sixth invention of the present application is the image displaying device, wherein an image signal of a frame or a field of the input image signal is inserted between the frames or the fields of the signal for an area other than the detected area(s) of one or more telops.

A seventh invention of the present application is the image displaying device, wherein an image signal to which linear interpolation processing has been executed is inserted between frames or fields of the input image signal for an area other than the detected area(s) of one or more telops.

An eighth invention of the present application is the image displaying device, wherein filter processing is performed for a border part between the detected area(s) of one or more telops and other areas.

A ninth invention of the present application is the image displaying device, wherein the feature amount (s) of one or more telops is(are) moving speed(s)/direction(s) of one or more telops moving in a predetermined direction.

A tenth invention of the present application is the image displaying device, wherein the detecting means divides a screen into a plurality of areas, obtains an average deviation of an average vector for each area, detects an area in which a distance between the average vector for each area and an average vector of an entire screen is larger than the threshold which is obtained by multiplying the average deviation by a predetermined coefficient as a telop area, obtains an average vector of vectors in the detected telop area and detects it as a moving speed/direction of the telop.

An eleventh invention of the present application is the image displaying device, wherein the motion compensation processing is performed using the detected moving speed(s)/direction(s) of one or more telops.

A twelfth invention of the present application is the image displaying device, wherein the feature amount(s) of one or more telops is area(s) and moving speed(s)/direction(s) of one or more telops moving in a predetermined direction.

A thirteenth invention of the present application is the image displaying device, wherein the detecting means divides a screen into a plurality of areas, obtains an average deviation of an average vector for each area, detects an area in which a distance between the average vector for each area and an average vector of an entire screen is larger than the threshold which is obtained by multiplying the average deviation by a predetermined coefficient as a telop area, obtains an average vector of vectors in the detected telop area and detects it as a moving speed/direction of the telop.

A fourteenth invention of the present application is the image displaying device, wherein the motion compensation processing is performed using the detected moving speed(s)/direction(s) of the telop(s) for the detected area (s) of one or more telops.

A fifteenth invention of the present application is the image displaying device, wherein different motion compensation processing is performed for the detected area (s) of one or more telops and for other areas.

A sixteenth invention of the present application is the image displaying device, wherein motion compensation processing is performed only for the detected area(s) of one or more telops and not for other areas.

A seventeenth invention of the present application is the image displaying device, wherein an image signal of a frame or a field of the input image signal is inserted between the frames or the fields of the signal for an area other than the detected area(s) of one or more telops.

An eighteenth invention of the present application is the image displaying device, wherein an image signal to which linear interpolation processing has been executed is inserted between frames or fields of the input image signal for an area other than the detected area(s) of one or more telops.

A nineteenth invention of the present application is the image displaying device, wherein filter processing is performed for a border part between the detected area(s) of one or more telops and other areas.

A twentieth invention of the present application is an image displaying device having rate converting means that converts and outputs the number of frames or fields of the input image signal to a display panel by interpolating an image signal which motion compensation processing has been executed between frames or fields of an input image signal, wherein the rate converting means comprises a motion vector detecting portion that detects a motion vector that shows a size and a direction of motion between input image signals separated by at least one frame or one field or more for each block by dividing the frames or the fields of the input image signal into a plurality of blocks of a predetermined fixed size, and the motion vector detecting portion has a storage portion that stores a motion vector detected for each block by an amount for at least one frame or one field, a telop information detecting portion that detects the feature amount (s) of one or more telops included in the input image signal using a motion vector stored in the storage portion, an initial displacement vector selecting portion that selects a motion vector having a most appropriate value for motion of a block to be detected as an initial displacement vector of the block to be detected among candidate vector groups read from motion vectors stored in the storage portion using the feature amount (s) of one or more telops detected by the telop information detecting portion, and a motion vector calculating portion that obtains and outputs a motion vector of the block to be detected by performing predetermined calculation in which the feature amounts of the telops detected by the telop information detecting portion are used and the initial displacement vector selected by the initial displacement vector selecting portion is determined as a starting point and stores it in the storage portion.

A twenty-first invention of the present application is the image displaying device, wherein the initial displacement vector selecting portion performs different processing for the area (s) of one or more telops detected by the telop information detecting portion and for other areas.

A twenty-second invention of the present application is the image displaying device, wherein the initial displacement vector selecting portion preferentially selects a candidate vector close to an average vector of an entire screen in an area other than the area(s) of one or more telops detected by the telop information detecting portion.

A twenty-third invention of the present application is the image displaying device, wherein the initial displacement vector selecting portion preferentially selects a candidate vector close to 0 vector in an area other than the area(s) of one or more telops detected by the telop information detecting portion.

A twenty-fourth invention of the present application is the image displaying device, wherein the initial displacement vector selecting portion adds and processes the motion vector(s) of one or more telops detected by the telop information detecting portion to the candidate vector.

A twenty-fifth invention of the present application is the image displaying device, wherein the initial displacement vector selecting portion adds and processes the motion vector(s) of one or more telops detected by the telop information detecting portion to the candidate vector for a block that corresponds to the area(s) of one or more telops detected by the telop information detecting portion.

A twenty-sixth invention of the present application is the image displaying device, wherein the initial displacement vector selecting portion performs weighting so that the motion vector(s) of one or more telops can be easily selected among the candidate vectors in the area(s) of one or more telops detected by the telop information detecting portion to perform selection processing of an initial displacement vector.

A twenty-seventh invention of the present application is the image displaying device, wherein the motion vector calculating portion changes a calculation method so that a vector in the same direction as a direction of the motion vector (s) of one or more telops detected by the telop information detecting portion is obtained for a block that corresponds to the area(s) of one or more telops detected by the telop information detecting portion.

A twenty- eighth invention of the present application is a image displaying method having a rate converting step for converting the number of frames or fields of the input image signal by interpolating an image signal which motion compensation processing has been executed between frames or fields of an input image signal, wherein a detection step for detecting the feature amount (s) of one or more telops included in the input image signal is included and the motion compensation processing at the rate converting step is controlled based on the detected feature amount(s) of one or more telops.

A twenty-ninth invention of the present application is an image displaying method having a rate converting step for converting the number of frames or fields of the input image signal by interpolating an image signal which motion compensation processing has been executed between frames or fields of an input image signal, wherein the rate converting step comprises a motion vector detecting step for detecting a motion vector that shows a size and a direction of motion between input image signals separated by at least one frame or more or one field or more for each block by dividing the frames or the fields of the input image signal into a plurality of blocks of a predetermined fixed size, and the motion vector detecting step comprises a storing step for storing a motion vector detected for each block by an amount of at least for one frame or one field, a telop information detecting step for detecting the feature amount(s) of one or more telops included in the input image signal by using the stored motion vector, an initial displacement vector selecting step for selecting a motion vector having a most appropriate value for motion of a block to be detected as an initial displacement vector of the block to be detected among candidate vector groups read from motion vectors stored at the storing step by using the detected feature amount (s) of one or more telops, and a motion vector calculating step for obtaining and outputting a motion vector of the block to be detected by performing predetermined calculation in which the detected feature amount(s) of the telops is(are) used and the initial displacement vector selected at the initial displacement vector selecting step is determined as a starting point.

A thirtieth invention of the present application is an image processing device having rate converting means that interpolates an image signal which motion compensation processing has been executed between frames or fields of an input image signal to convert and output the number of frames or fields of the input image signal, wherein a detecting means that detects the feature amount (s) of one or more telops included in the input image signal is provided and the motion compensation processing in the rate converting means is controlled based on the detected feature amount(s) of one or more telops.

A thirty-first invention of the present application is an image processing device having rate converting means that converts and outputs the number of frames or fields of the input image signal by interpolating an image signal which motion compensation processing has been executed between frames or fields of an input image signal, wherein the rate converting means comprises a motion vector detecting portion that detects a motion vector that shows a size and a direction of motion in input image signals separated by at least one frame or one field or more for each block by dividing the frames or the fields of the input image signal into a plurality of blocks of a predetermined fixed size, and the motion vector detecting portion comprises a storage portion that stores a motion vector detected for each block by an amount of at least for one frame or one field, a telop information detecting portion that detects the feature amount (s) of one or more telops included in the input image signal using a motion vector stored in the storage portion, an initial displacement vector selecting portion that selects a motion vector having a most appropriate value for motion of a block to be detected as an initial displacement vector of the block to be detected among candidate vector groups read from a motion vector stored in the storage portion using the feature amount(s) of one or more telops detected by the telop information portion, and a motion vector calculating portion that obtains and outputs a motion vector of the block to be detected and stores it in the storage portion by performing predetermined calculation in which the feature amounts of the telops detected by the telop information detecting portion are used and the initial displacement vector selected by the initial displacement vector selecting portion is determined as a starting point.

A thirty-second invention of the present application is an image processing method having a rate converting step for converting the number of frames or fields of the input image signal by interpolating an image signal which motion compensation processing has been executed between frames or fields of an input image signal, wherein a detection step for detecting the feature amount (s) of one or more telops included in the input image signal is included and the motion compensation processing at the rate converting step is controlled based on the detected feature amount(s) of one or more telops.

A thirty-third invention of the present application is an image processing method having a rate converting step for converting the number of frames or fields of the input image signal by interpolating an image signal which motion compensation processing has been executed between frames or fields of an input image signal, wherein the rate converting step comprises a motion vector detecting step for detecting a motion vector that shows a size and a direction of motion between input image signals separated by at least one frame or more or one field or more for each block by dividing the frames or the fields of the input image signal into a plurality of blocks of a predetermined fixed size, and the motion vector detecting step comprises a storing step for storing a motion vector detected for each block by an amount of at least for one frame or one field, a telop information detecting step for detecting the feature amount (s) of one or more telops included in the input image signal by using the stored motion vector, an initial displacement vector selecting step for selecting a motion vector having a most appropriate value for motion of a block to be detected as an initial displacement vector of the block to be detected among candidate vector groups read from motion vectors stored at the storing step by using the detected feature amount (s) of one or more telops, and a motion vector calculating step for obtaining and outputting a motion vector of the block to be detected by performing predetermined calculation in which the detected feature amount(s) of the telops is (are) used and the initial displacement vector selected at the initial displacement vector selecting step is determined as a starting point.

EFFECTS OF THE INVENTION

According to the present invention, with the structure described above, it is possible to perform motion compensation processing for a telop portion that moves in a predetermined direction on a screen more accurately and as a result, it is also possible to improve the image quality in an area where a telop exists.

BRIEF DESCRIPTION OF DRAWINGS

Fig. 1 is a block diagram showing the schematic structure of an FRC driving display circuit in a conventional liquid crystal display device;
Fig. 2 is a view illustrating frame rate conversion processing by the conventional FRC driving display circuit shown in Fig. 1;
Fig. 3 is a view illustrating interpolation frame generation processing by a motion vector detecting portion and an interpolation frame generating portion;
Fig. 4 is a functional block diagram showing a structural example of the motion vector detecting portion in a frame rate converting portion provided in an image displaying device according to an embodiment of the present invention;
Fig. 5 is a functional block diagram showing a structural example of an initial displacement vector selecting portion in Fig. 4;
Fig. 6 is a functional block diagram showing another structural example of the initial displacement vector selecting portion in Fig. 4;
Fig. 7 is a functional block diagram showing still another structural example of the initial displacement vector selecting portion in Fig. 4;
Fig. 8 is a vector diagram view illustrating a method for calculating a motion vector V using an iterative gradient method twice;
Fig. 9 is a schematic view illustrating a motion vector of an image that is moved between a previous frame by one-frame and a current frame;
Fig. 10 is an illustrative view showing a state where an image is resolved into a plurality of blocks;
Fig. 11 is an illustrative view showing a telop that moves in a horizontal direction on a screen;
Fig. 12 is an illustrative view showing a state where a screen is divided into a plurality of band-like areas;
Fig. 13 is an illustrative view showing a sate where a screen is resolved into an area including a telop and other area;
Fig. 14 is an illustrative view showing a relationship between an average vector in a telop area, an average vector in an area other than the telop, and an average vector in an entire screen;

Fig. 15 is an illustrative view showing a relationship between an average vector in a telop area, an average vector in an area other than the telop, and an average vector in an entire screen;

Fig. 16 is an illustrative view showing an example when detecting two pieces of telop information; and

Fig. 17 is an illustrative view showing another example when detecting two pieces of telop information.

EXPLANATIONS OF REFERENCE NUMERALS

1...frame delaying portion, 2...initial displacement vector selecting portion, 2a...coordinate converting portion, 2b...subtracting portion, 2c...absolute value accumulating portion, 2d...selecting portion, 2e...telop vector addition determining portion, 3...motion vector calculating portion, 4...vector memory, 5...telop information detecting portion, 100...frame rate converting (FRC) portion, 101...motion vector detecting portion, 102...interpolation frame generating portion, 103...electrode driving portion, 104...liquid crystal display panel

PREFERRED EMBODIMENTS OF THE INVENTION

Preferred embodiments of an image displaying device according to the present invention will hereinafter be described in detail referring to the accompanying drawings, but same portion as that of the above-described conventional example will be represented by the same reference numerical, with repeated description omitted. Note that, although the present invention is applicable to any of a field signal and an interpolation field signal, and a frame signal and an interpolation frame signal, since both of them (field and frame) have the similar relationship each other, description will be given with a frame signal and an interpolation frame signal as a representative example.

(1)Entire structure and how to use of telop information

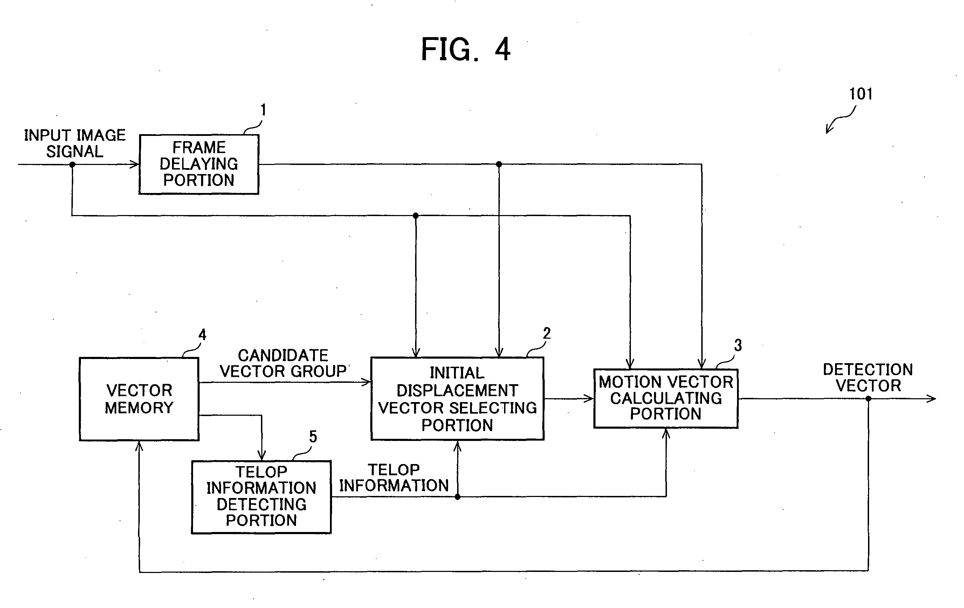

Fig. 4 is a functional block diagram showing an example of a motion vector detecting portion provided in the image displaying device of the present invention, and it illustrates in detail the internal structure of a motion vector detecting portion 101 included in an FRC portion 100 of the image displaying device of Fig. 1. The motion vector detecting portion 101 of the present embodiment has a frame delaying portion 1, an initial displacement vector selecting portion 2, a motion vector calculating portion 3, a vector memory 4, and a telop information detecting portion 5.

The motion vector detecting portion 101 according to the present embodiment is a portion that divides an input image signal to be input for each frame into a plurality of blocks comprised of a predetermined fixed size, for example, m pixels × n lines (m and n are integers) and obtains, for each divided block, a motion vector indicating a moving direction and a size between a divided block and a block that is delayed by the frame delaying portion 1, for example, a corresponding block in an input image signal of one-frame previous frame and includes an initial displacement vector selecting portion 2 that selects an optimum motion vector as an initial displacement vector in a block to be detected using a candidate vector group selected from motion vectors that have been already detected and stored in the vector memory 4 together with telop information obtained by the telop information detecting portion 5, and a motion vector calculating portion 3 that obtains a true motion vector in the block to be detected correctly by performing gradient method calculation twice using the telop information and determining the initial displacement vector as a starting point.

Particularly, the present embodiment is characterized by providing the telop information detecting portion 5 and using telop information obtained by this for processing in the initial displacement vector selecting portion 2 or the motion vector calculating portion 3. In the initial displacement vector selecting portion 2, different processing is performed in an area where a telop exists and other area, an initial displacement vector is selected in view of a moving speed/direction of a telop, or combination thereof is performed. In addition, the motion vector calculating portion 3 performs vector calculation in view of a moving speed/direction of a telop in an area where a telop exists. By performing such processing, a detection vector is obtained more accurately, particularly in an area where a telop exists.

In the above-described telop information detecting portion 5, as feature amount of a telop (telop information) included in an input image signal, for example, telop area information showing that which motion detecting block on a screen corresponds to a telop, and telop vector information showing a moving speed/direction of a telop are detected. When there are a plurality of telops on the screen, telop area information and telop vector information may be detected for each of them. The telop information detecting portion 5 will be described in detail later.

Moreover, here, a calculation method in the motion vector calculating portion 3 will be described with an example using an iterative gradient method, but not limited to the iterative gradient method, and a block matching method or the like may be used.

To describe in more detail, the motion vector detecting portion 101 shown in Fig. 4 is comprised of, as described above, the initial displacement selecting portion 2, the motion vector calculating portion 3, the vector memory 4, and the telop information detecting portion 5. Each of the initial displacement selecting portion 2 and the motion vector calculating portion 3 is supplied with a current frame signal and a previous frame signal that is delayed by one frame through the frame delaying portion 1.

The initial displacement vector selecting portion 2 is a selecting circuit that selects, as an initial displacement vector serving as a starting point of a gradient method, a motion vector having a most appropriate value for motion of a block to be detected, for example, a value nearest to motion of the block to be detected, among already-detected motion vectors obtained by motion vector calculation in the previous frame, and selects an appropriate motion vector from the above-described candidate vector group and the telop vector. In the initial displacement vector selecting portion 2, for example, a previous frame signal is divided into blocks of m pixels $\times$ n lines, as described above, and the current frame signal and the previous frame signal are used as a standard for selecting an initial displacement vector for each divided block.

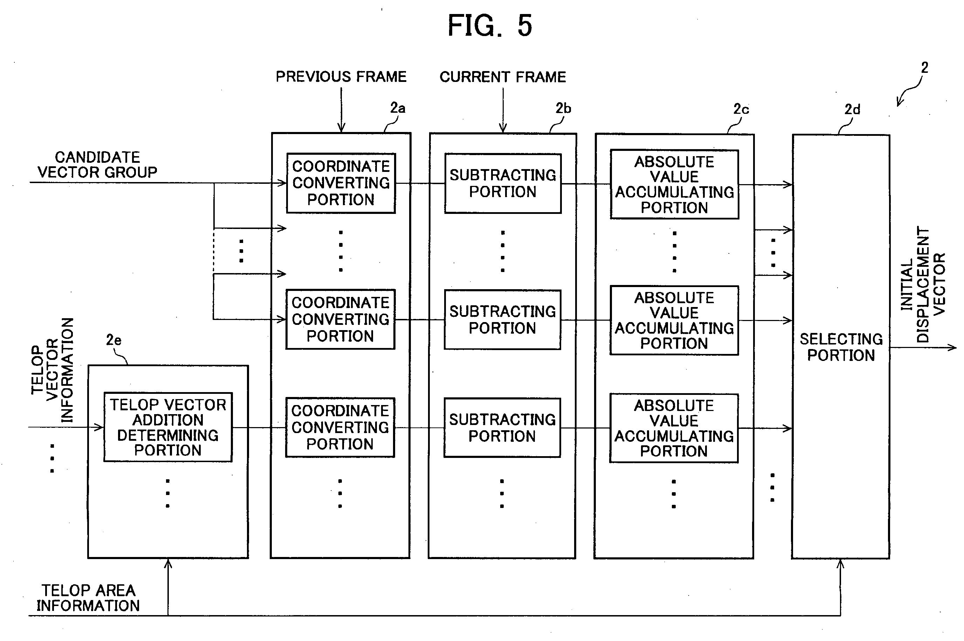

The initial displacement vector selecting portion 2 has, for example, as shown in Fig. 5, a coordinate converting portion 2a, a subtracting portion 2b, an absolute value accumulating portion 2c, a selecting portion 2d, and a telop vector addition determining portion 2e. To the initial displacement vector selecting portion 2, motion vectors of eight blocks surrounding a block corresponding to a block to be detected sequentially read from the vector memory 4, that is, a candidate vector group, one or more telop vectors output from the telop information detecting portion 5 and telop area information, a previous frame signal, and a current frame signal are input.

In the telop vector addition determining portion 2e, one or more telop vectors and telop area information are input, and when a block in processing corresponds to a telop area, a telop vector in the telop area is output to the coordinate converting portion 2a. In addition, when the block in processing corresponds to a plurality of telop areas, a telop vector in each of the plurality of telop areas, that is, a plurality of telop vectors are output to the coordinate converting portion 2a.

Each motion vector of each candidate vector group and one or more telop vectors output from the telop vector addition determining portion 2e serve as candidates of an initial displacement vector. The candidates of the initial displacement vector are supplied to each coordinate converting portion 2a, a target block of a previous frame signal supplied from the frame delaying portion 1 is displaced using a motion vector thereof, coordinate conversion into a current frame is performed, and a result of the coordinate conversion is supplied to each subtracting portion 2b.

Note that, in the present embodiment, as to the candidate vector groups, motion vectors of a previous frame detected in eight blocks surrounding the block to be detected serve as the candidate vector groups for selecting an initial displacement vector of the block to be detected, but these candidate vector groups are not restricted to such an example, and may be certainly determined from already-detected motion vectors of other areas.

In each of the subtracting portions 2b, subtraction processing is applied between the previous frame signal coordinate-converted by the coordinate converting portion 2a and the input current frame signal to obtain a difference for each pixel, and each of difference result is supplied to the absolute value accumulating portion 2c. In each of the absolute value accumulating portions 2c, an absolute value of the difference of each pixel is obtained to accumulate the absolute difference for the number of pixels of the block, and each of the accumulation results is output to the selecting portion 2d as an evaluation value of the candidate vector.

The accumulation result obtained in the above-described procedure is called DFD (Displaced Field Difference). The DFD is an index showing a degree of accuracy of a calculated vector (here, a candidate vector), and the smaller the value of the DFD becomes, the better a block of a previous frame and a coordinate-converted block of a current frame match and that shows a corresponding candidate vector is more appropriate.

Next, the selecting portion 2d having received each of the accumulation results (DFD) for each block compares the accumulation results (DFD) of each block with each other, and detects a candidate vector in which the accumulation result (DFD) becomes smallest, that is, a candidate vector that is considered to be most appropriate, and selects the candidate vector as an initial displacement vector to supply to the motion vector calculating portion 3. At this time, using telop area information from the telop information detecting portion 5, when a block to be detected corresponds to a telop area, processing is performed so that a telop vector is selected preferentially.

More specifically, for example, when a block to be detected corresponds to a telop area, weighting is performed so that the accumulation result (DFD) for a telop vector becomes small among output values from the absolute value accumulating portion 2c. For example, it is possible to use a method in which the accumulation result for the telop vector is multiplied by a coefficient w (0<w<1) to make a value of the accumulation result (DFD) for the telop vector small.

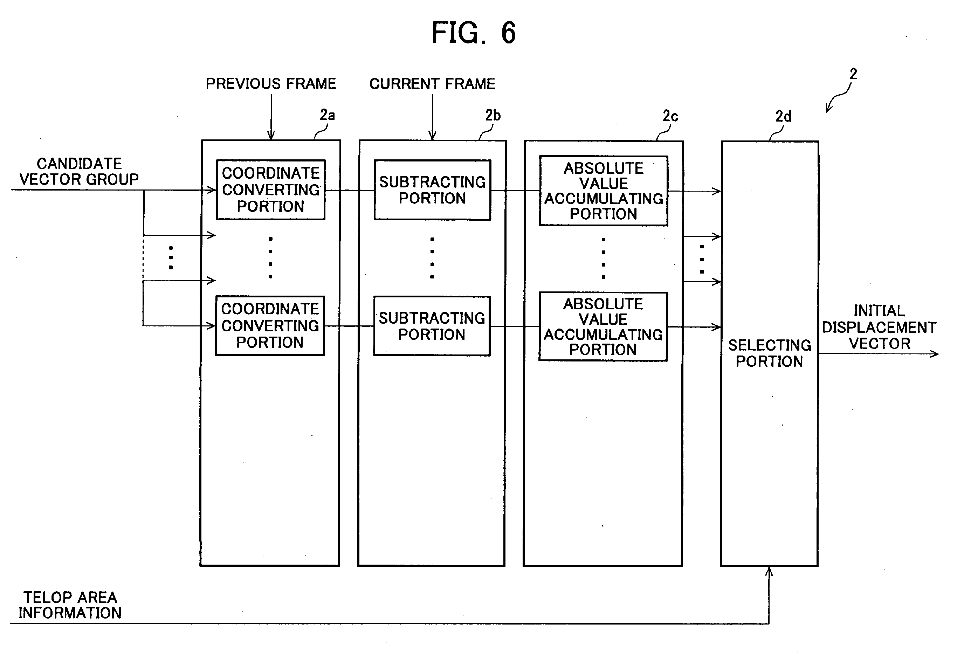

Note that, although description has been given for a method in which both telop area information and telop vector information detected by the telop information detecting portion 5 are used at the initial displacement vector selecting portion 2 in the above-described embodiment, the structure to use either one of information may be employed. For example, description will be given for an example of the structure to use only telop area information, referring to Fig. 6. With this structure, since a telop vector is not input, the telop vector addition determining portion 2e in Fig. 5 is excluded. In the present example, in the selecting portion 2d, with respect to output from the absolute value accumulating portion 2c, when a block in processing corresponds to an area other than a telop area, weighting to give priority to an average vector on an entire screen or 0 vector is performed, whereas when a block in processing corresponds to a telop area, such weighting is not performed. By performing such processing, a relatively fast vector tends to be selected in the telop area. That is, a vector corresponding to a fast-moving telop tends to be selected.

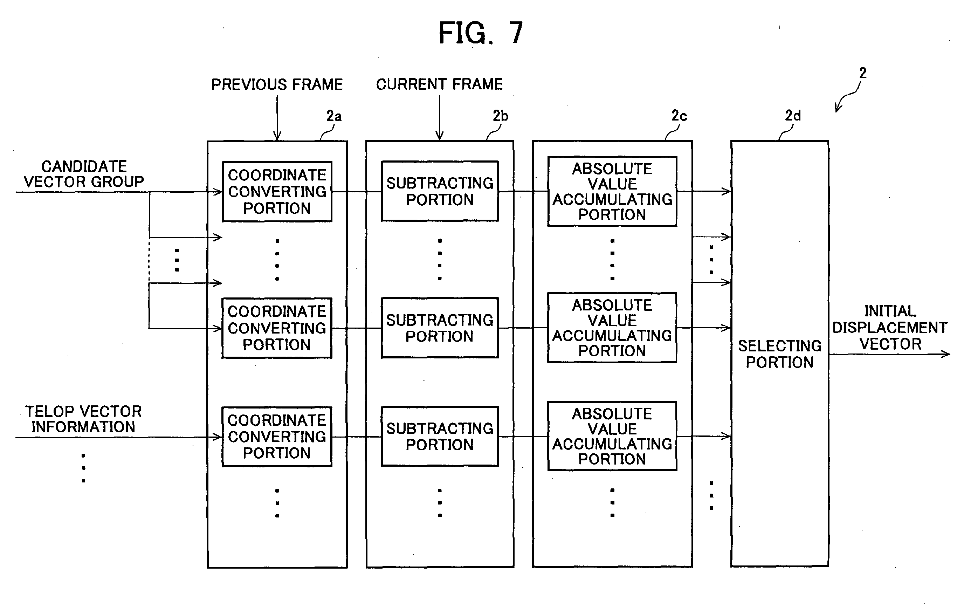

Further, description will be given for an example of the structure to use only telop vector information, referring to Fig. 7. With this structure, telop area information is not input. Hence, the telop vector addition determining portion 2e in Fig. 5 is also unnecessary, and a telop vector is added to candidates of an initial displacement vector for all blocks. Whether a vector same as or close to the telop vector exists in candidates of the initial displacement vector for the blocks where a telop exists depends on a vector detection state in a previous frame, and that is not reliable. Accordingly, by giving an additional telop vector as the candidate, it is possible to improve possibility that a more appropriate initial displacement vector is selected.

Further, it is needless to say that one or more methods to make use of telop area information and telop vector information as described above may be arbitrarily combined to use.

The motion vector calculating portion 3 is a calculating circuit that obtains a true motion vector from the previous frame signal to the current frame signal by gradient method calculation, in order to detect a motion vector for each block, by making use of a current frame signal and a previous frame signal and by determining an initial displacement vector supplied from the initial displacement vector selecting portion 2 as a starting point. Note that, since a method for calculating a motion vector by a gradient method calculation is described in detail in each of the above-described patent documents and non-patent documents, description thereof will be omitted herein, but how an initial displacement vector is used in the present embodiment will be described below, taking an iterative gradient method as an example.

For example, in the gradient method calculation, a motion displacement amount V1 estimating a motion amount of a current frame is obtained in accordance with the following equations (1) and (2) by determining a coordinate position where a previous frame signal is displaced using an initial displacement vector V0 ($\alpha$, $\beta$) as a starting point.

[Equation 1]

$$Vx = \sum (sign(\Delta x) \cdot DFD(x, y)) / \sum | \Delta x | \qquad \text{...Equation (1)}$$

[Equation 2]

$$Vy = \sum (sign(\Delta y) \cdot DFD(x, y)) / \sum | \Delta y | \qquad \text{...Equation (2)}$$

However, in the Equations (1) and (2), Vx shows an x-direction component of difference between motion vectors V0 and V1, and Vy shows a y-direction component of difference between motion vectors V0 and V1. Here, $\Sigma$ shows that a sum of all coordinates in a block area of m pixels × n lines, for example, 8 pixels × 8 lines is calculated and obtained. Moreover, $\Delta x$ shows a gradient in an x-direction of image brightness in a target coordinate (a differential value between the image brightness of the pixel at the target coordinate and that of an adjacent pixel in an x-direction), $\Delta y$ shows a gradient in a y-direction of image brightness in a target coordinate (a differential value between the image brightness of the pixel at the target coordinate and that of an adjacent pixel in a y-direction), and DFD (x, y) shows a differential value between frames of a coordinate of a previous frame (x, y) and a coordinate of a current frame (x+$\alpha$, y+$\beta$), which are calculated in the same manner as one described above. In addition, sign ($\Delta x$) and sign ($\Delta y$) are symbols showing a direction of gradient represented by either +1, -1, or 0, respectively.

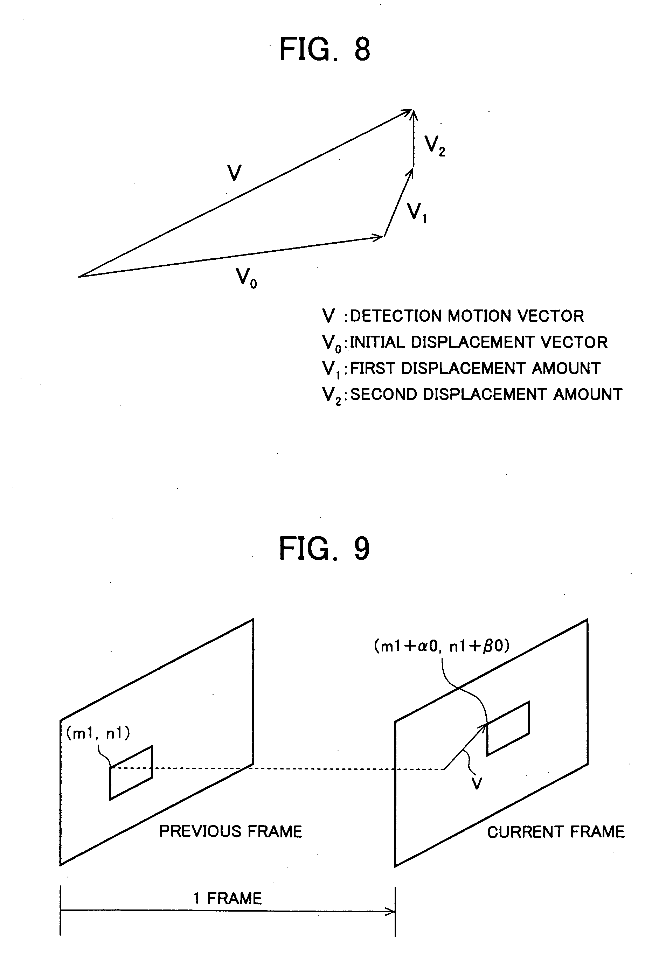

For example, in the case of iterative gradient method twice, as shown in Fig. 8, a first displacement amount V1 and a second displacement amount V2 are obtained by determining an initial displacement vector as V0 and a motion vector V which is a sum of these amounts is obtained by the following Equation (3).

[Equation 3]

$$V = V0 + V1 + V2 \qquad \ldots \text{Equation (3)}$$

Using the Equation (3), as shown in Fig. 9, when an image that was in a block at the coordinate (m1, n1) in a previous frame is moved to a block at a position of a coordinate (m1+$\alpha$0, n1+$\beta$0) in a current frame, a motion amount thereof is obtained as a vector V. Here, Fig. 9 is a schematic view illustrating a motion vector V of an image that moved between the frame one frame previous to the current frame and the current frame in detail.

In this way, the motion vector V obtained by the motion vector calculating portion 3 in Fig. 4 is accumulated in the vector memory 4, and utilized as the candidate vector for selecting an initial displacement vector used for calculating motion vectors of the following frames.

As describe above, by extracting a motion feature on an entire screen and applying an initial displacement vector compensated based on the motion feature on the entire screen, erroneous detection of an initial displacement vector is prevented, and it is possible to calculate a true motion vector for each block of a current frame signal accurately in a few times of calculation by an iterative gradient method, for example, about twice.

Here, one or more pieces of telop area information is input from the telop information detecting portion 5 to the motion vector calculating portion 3, and when a block to be detected corresponds to a telop area, special processing may be performed. For example, when a direction of a telop vector is a horizontal direction, an iterative gradient method is performed only with a value of x, and a motion vector that is finally obtained may be limited to motion in a horizontal direction. Alternatively, when a direction of a telop vector is a vertical direction, an iterative gradient method is performed only with a value of y, and a motion vector that is finally obtained may be limited to motion in a vertical direction. This is because by performing calculation in accordance with a direction of the telop vector, it is made easier to follow motion of a telop.

Note that, in the above-described description, as a method for calculating a motion vector in the motion vector calculating portion 3, an iterative gradient method that uses one time through a plurality of times of gradient method calculation has been employed, but not restricted thereto, and a pattern matching method or other calculation methods may be used.

The vector memory 4 is a storing portion that includes a RAM (Random Access Memory) for storing motion vectors of at least one frame having been already detected for each block, has an input terminal that is connected to an output terminal of the motion vector calculating portion 3, and is configured so as to sequentially update motion vectors detected in the corresponding block by the motion vector calculating portion 3 to store at an address corresponding to a position of each block divided into, for example, 8 pixels $\times$ 8 lines.

With the above-described procedure, a motion vector detection result for each block is output from the motion vector detecting portion 101.

Then, in an interpolation frame generating portion 102, an interpolation image is generated using the motion vector detection result for each block. At this time, generation of an interpolation image may be performed using a motion vector over an entire area of a screen, or the generation of an interpolation image using a motion vector may be performed in a telop area, but the same image as that of a previous frame or that of subsequent frame, may be output repeatedly, for example, in other area without generating an interpolation image using a motion vector.

That is, when no telop is detected, motion compensation processing is not performed over the entire screen, whereas when a telop is detected, motion compensation processing may be performed only for a telop area and motion compensation processing may not be performed for other areas.

As described above, an object photographed by a camera generally includes a blur (camera blur) caused by a light accumulating time of the camera when its moving speed is fast. In a case where there are a lot of camera blurs that originally exist, even when a motion blur is reduced by the FRC, the effect is hardly to be seen. Whereas, since a telop is one that is synthesized with an image later, a camera blur or the like is not included even when its moving speed is fast, thus the FRC has much effect on improving the motion blur. Hence, just by performing motion compensation processing only in a telop area, it is possible to obtain a great improvement effect visually, and by limiting the interpolation image generation processing only to a telop area, it is possible to reduce processing amount for generating an interpolation image.

In addition, when interpolation image generation by motion compensation is performed only in a telop area in this way, there is a case that presence/absence of motion compensation processing is clearly shown to be conspicuous in an image in a border between a telop area and other areas. In order to reduce this, the filtering processing such as applying a low pass filter to a border part between a telop area and other areas is performed and thereby, strength of the motion compensation processing is changed continuously to suppress that the border is conspicuous.

Here, to an area other than a telop area where motion compensation interpolation processing is not applied, as described above, motion compensation interpolation processing is not performed, but an image signal of the same frame may be continuously output at a high speed, that is, an image signal of the frame may be inserted between frames of an input image signal to convert a frame rate, alternatively, an image generated by linear interpolation processing from previous and subsequent frames may be interpolated, that is, an image signal to which linear interpolation processing has been executed may be interpolated between frames of an input image signal to convert a frame rate. Note that, the linear interpolation processing is to obtain an interpolation frame from an image signal of previous and subsequent frames by linear interpolation using a frame interpolation rate α.

(2) Example of a method for detecting telop information

As described above, in the telop information detecting portion 5, telop information is detected using an already-detected motion vector obtained by motion vector calculation of a previous frame stored in the vector memory 4. An example of a specific method of realizing the telop information detecting portion 5 will be described in detail below.

Information applicable to telop detection is only a motion vector of each motion detection block stored in the vector memory 4 and information of texture of each motion detection block. Among them, since a telop has various colors, information of texture is used only as supplement. Accordingly, it is necessary to detect telop area information and telop vector information from information of a motion vector of each motion detection block.

In addition, a video has various objects in motion, for example, such as a person and an automobile, in addition to a telop. There is also a case that an entire screen is relatively moved due to a pan of camera. Accordingly, it is difficult to perform simple determination that, for example, a fast-moving area is a telop area, that is, determination of whether or not a telop based on the absolute amount of a motion vector.

Hence, in the present embodiment, a telop area and a telop speed are detected using statistical information such as a differential amount between an average vector of an entire screen and a motion vector of each motion detection block, and an average deviation of motion vectors.

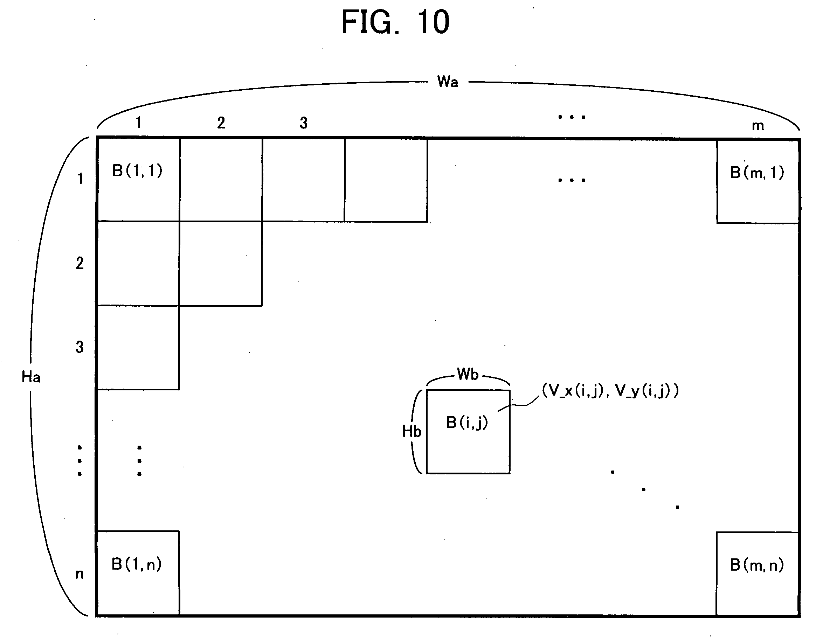

Fig. 10 shows a state where an image is decomposed into blocks for vector detection. A size of the entire image is Wa pixel in width and Ha pixel in height. When this image is divided by a motion detection block of Wb pixel in width and Hb pixel in height, the number of blocks becomes m blocks in width and n blocks in length. Generally, the number of pixels of the entire image is set so as to be divided by the number of blocks represented by an integer. That is, Wa = Wb × m, Ha = Hb × n.

For example, when an image has high-definition resolution (Wa = 1920 pixels, Ha = 1080 pixels) and a size of a block is 8 × 8 pixels, m is 240 and n is 135. Each motion detection block is referred to as B (i, j), and a motion vector detected in each motion detection block is (V_x (i, j), V_y (i, j)).

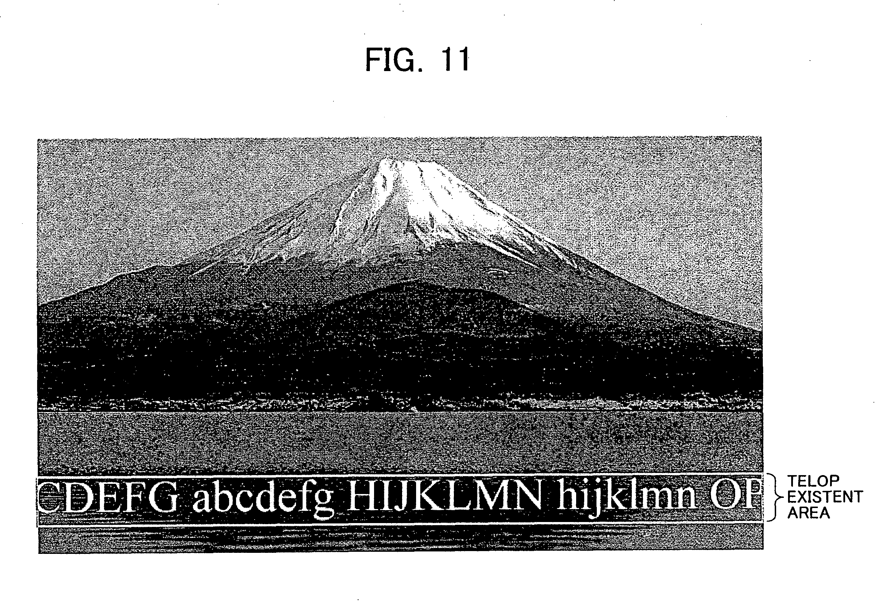

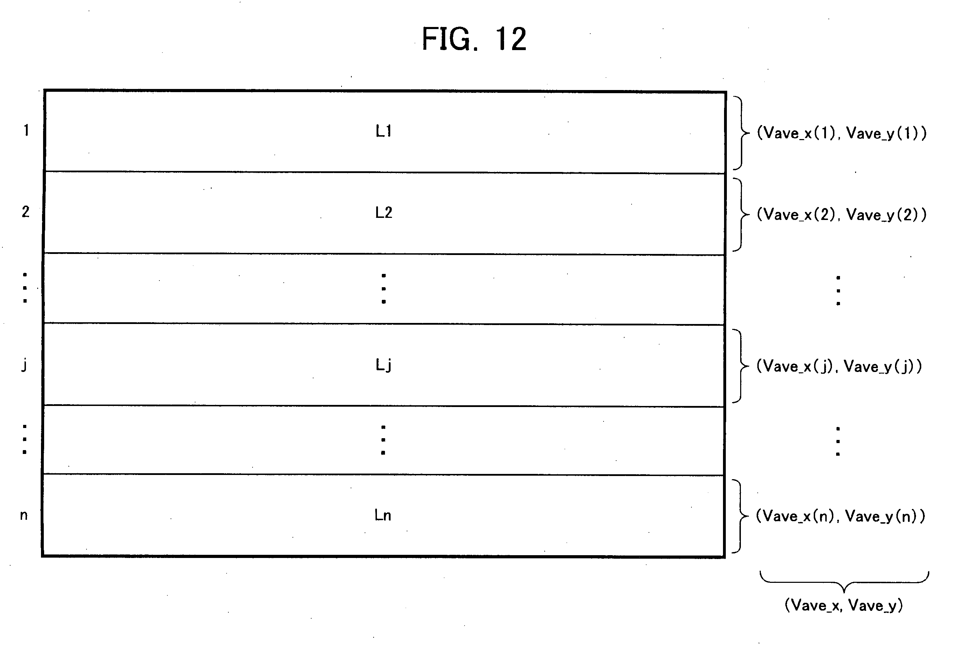

Here, since most telops are moved in a horizontal direction, in the present embodiment, a telop that is moved in a horizontal direction is to be detected. A telop that is moved in a horizontal direction is to be positioned, as shown in Fig. 11, at a horizontally long and band-like area on a screen. Hence, as shown in Fig. 12, the screen is divided into n pieces that are the horizontally long and band-like area L (1) through L (n) and it is determined whether or not each area includes a telop.

A band-like area L (j) includes motion detection blocks of B (1, j) through B (m, j) in Fig. 10. When an average vector of motion vectors in a motion detection block included in L (j) is (Vave_x (j), Vave_y (j)),

[Equation 4]

$$Vave\_x(j) = \frac{1}{m}\sum_{i=1}^{m}V\_x(i,j) \qquad \ldots \text{Equation (4)}$$

[Equation 5]

$$Vave\_y(j) = \frac{1}{m}\sum_{i=1}^{m} V\_y(i,j) \quad …\text{Equation (5)}$$

are obtained.
In addition, when an average vector of motion vectors in all motion detection blocks (entire average vector) is (Vave_x, Vave_y),
[0111]

[Equation 6]

$$Vave\_x = \frac{1}{n}\sum_{j=1}^{n} Vave\_x(j) = \frac{1}{mn}\sum_{i=1}^{m}\sum_{i=1}^{n} V\_x(i,j) \quad …\text{Equation (6)}$$

[Equation 7]

$$Vave\_y = \frac{1}{n}\sum_{j=1}^{n} Vave\_y(j) = \frac{1}{mn}\sum_{i=1}^{m}\sum_{i=1}^{n} V\_y(i,j) \quad …\text{Equation (7)}$$

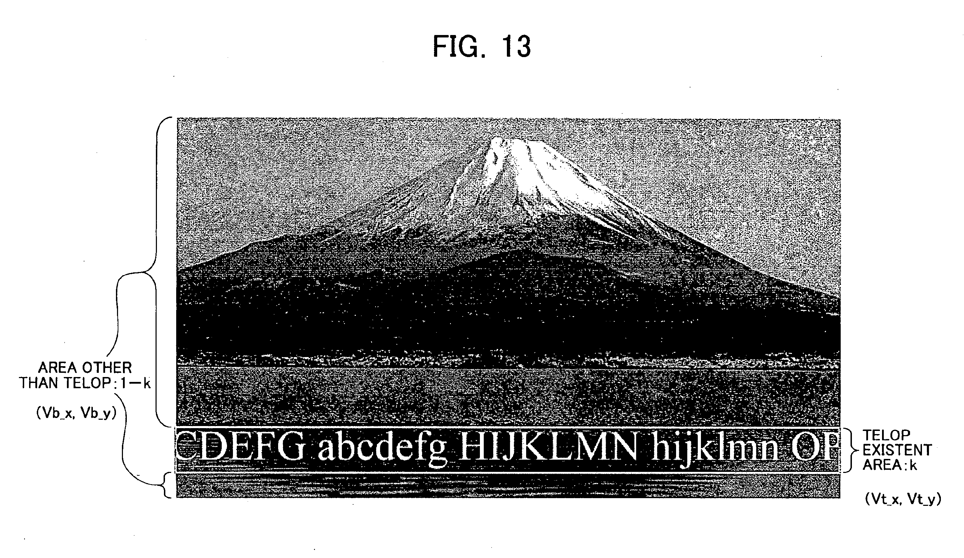

are obtained.
Here, as shown in Fig. 13, a screen is considered by sorting out an area including a telop from other areas. When a height of the screen is 1, a height of a telop area is k. However, it is assumed that the telop area will not exceed half of the screen. That is,
[0115]

[Equation 8]

$$0 \leqq k < 0.5 \quad …\text{Equation (8)}$$

is assumed. Therefore, a height of an area other than the telop is 1-k. Note that, when the area other than the telop is divided into two or more by the telop area, each height is added.
Next, when an average of motion vectors in a motion detection block included in the telop area is (Vt_x, Vt_y) and an average of motion vectors in a motion detection block included in an area other than the telop (herein, referred to as a background area) is (Vb_x, Vb_y), among the average vector of the telop area, the average vector of the area other than the telop, and the average vector of the entire screen, relationship of
[Equation 9]

$$Vave\_x = kVt\_x + (1-k)Vb\_x \qquad \text{...Equation (9)}$$

[Equation 10]

$$Vave\_y = kVt\_y + (1-k)Vb\_y \qquad \text{...Equation (10)}$$

are satisfied.

Actually, all blocks in the telop area do not always have a motion vector having the same speed as the moving speed of the telop. For example, a block in which characters of the telop are broken off has a motion vector having a speed other than a moving speed of the telop. However, in the present embodiment, it is assumed that all blocks in the telop area have a moving speed of the telop in the meantime, and description will be given below. This assumption will be described below.

In the present embodiment, since a telop that is moved in a horizontal direction is to be detected, each average vector will be also described below by focusing on an value in a horizontal direction, that is, an x value of a vector.

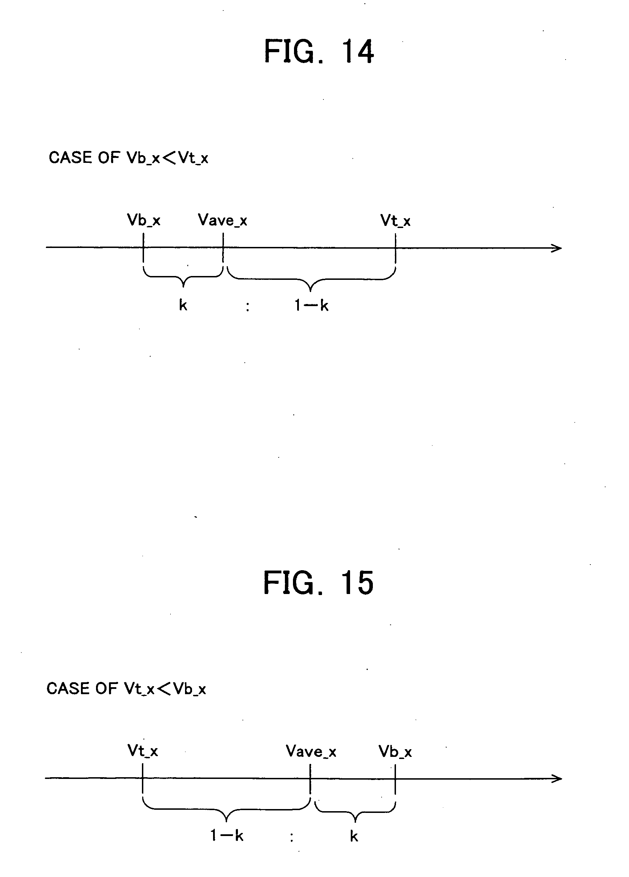

In Fig. 14 and Fig. 15, relationship among an average vector of a telop area Vt_x, an average vector of an area other than the telop Vb_x, and an entire average vector Vave_x in the Equation (9) is shown.

Fig. 14 shows a case of Vb_x < Vt_x. Vave_x is positioned between Vb_x and Vt_x, and the ratio of a distance between Vb_x and Vave_x and a distance between Vave_x and Vt_x is k : 1 - k. This relationship is satisfied regardless of the magnitude or positive/negative of values of Vave_x, Vb_x, and Vt_x. Moreover, with the conditions of the Equation (8),

[Equation 11]

$$k < 1 - k \qquad \text{...Equation (11)}$$

is always satisfied. Accordingly, the distance between Vb_x and Vave_x is always smaller than the distance between Vave_x and Vt_x.

Fig. 15 shows a case of Vt_x < Vb_x. Vave_x is positioned between Vt_x and Vb_x, and the ratio of a distance between Vt_x and Vave_x and a distance between Vave_x and Vb_x is 1 - k : k. This relationship is satisfied regardless of the magnitude or positive/negative of values of Vave_x, Vt_x, and Vb_x. Moreover, with the conditions of the Equation (8), the Equation (11) is always satisfied. Therefore, in the same manner as that shown in the case of Fig. 14, the distance between Vt_x and Vave_x is always smaller than the distance between Vave_x and Vb_x.

That is, the distance between Vb_x and Vave_x is always smaller than the distance between Vave_x and Vt_x whether it is Vb_x < Vt_x or Vt_x < Vb_x,. That is,

[Equation 12]

$$| Vb\_x - Vave\_x | < | Vt\_x - Vave\_x |$$

...Equation (12)

is always satisfied.

Hence, a certain threshold T is provided so that

[Equation 13]

$$| Vb\_x - Vave\_x | < T < | Vt\_x - Vave\_x |$$

...Equation (13)

is satisfied. Using the threshold T, with respect to an average vector x value Vave_x (j) of motion vectors in a motion detection block included in each band-like area Lj in Fig. 12, a distance between Vave_x (j) and Vave_x is compared with the threshold T, and when the distance is larger than T, it is possible to determine that the band-like area Lj is highly likely to belong to a telop area. That is, with respect to a certain band-like area Lj, when

[Equation 14]

$$T < | Vave\_x(j) - Vave\_x |$$ ...Equation (14)

is satisfied, the band-like area is determined to be a telop area.

The problem here is how the threshold T is set. A method therefor will be described below.

The setting conditions of the threshold T is as shown in the Equation (13). In order to determine the threshold T from the Equation (13), it is found that information of |Vb_x - Vave_x| and |Vt_x - Vave_x| is necessary, however, it is impossible to obtain Vt_x and Vb_x directly. This is because it is not clear that which area is a telop area in advance.

Here, each of |Vb_x - Vave_x| and |Vt_x - Vave_x| is a difference between an entire average vector and an average vector of a background area, and a difference between an entire average vector and an average vector of a telop area, respectively, and values thereof have a lot to do with variation of motion vectors. Hence, using an average deviation that is one of measures of variation in data, the threshold T is decided.

When an average deviation of the average vector Vave_x (j) in each band-like area Lj is M, M is calculated by

[Equation 15]

$$M = \frac{1}{n} \sum_{j=1}^{n} | Vave\_x(j) - Vave\_x |$$ ...Equation (15)

The average deviation M is multiplied by a constant $\alpha$, and
[Equation 16]

$$T = \alpha M \qquad \text{...Equation (16)}$$

is provided so that the appropriate constant $\alpha$ is obtained as follows.
First, the case of Vb_x < Vt_x is considered. In this case, when the average deviation M is represented using Vt_x and Vb_x,
**[0145]**

[Equation 17]

$$M = (Vt\_x - Vave\_x)k + (Vave\_x - Vb\_x)(1 - k) \qquad \text{...Equation (17)}$$

is obtained. When rearranging by substituting the Equation (9) into the Equation (17),
**[0147]**

[Equation 18]

$$M = 2k(1 - k)(Vt\_x - Vb\_x) \qquad \text{...Equation (18)}$$

is obtained.
Based on the Equation (13) and the Equation (16),
**[0150]**

[Equation 19]

$$| Vb\_x - Vave\_x | < \alpha M < | Vt\_x - Vave\_x | \qquad \text{...Equation (19)}$$

is obtained.
Meanwhile, based on the conditions of Vb_x < Vt_x and the Equation (9),
**[0153]**

[Equation 20]

$$|Vb\_x - Vave\_x| = |k(Vt\_x - Vb\_x)| = k(Vt\_x - Vb\_x)$$

...Equation (20)

[Equation 21]

$$|Vt\_x - Vave\_x| = |(1-k)(Vt\_x - Vb\_x)| = (1-k)(Vt\_x - Vb\_x)$$

...Equation (21)

are obtained.
When rearranging by substituting the Equation (18), the Equation (20), and the Equation (21) into the Equation (19), the conditional Equation of
[Equation 22]

$$\frac{1}{2(1-k)} < \alpha < \frac{1}{2k}$$

...Equation (22)

is obtained.
Note that, also in the case of Vt_x < Vb_x, the Equation (22) is obtained as the conditional Equation, but detailed description thereof will be omitted.
With the Equation (22), by assuming a height k of a telop area, it is possible to obtain a value of a constant $\alpha$. Supposedly, when k is 0.2 and substitute k=0.2 into the Equation (22), the conditions of
[Equation 23]

$$0.625 < \alpha < 2.5$$

...Equation (23)

is obtained. When the constant $\alpha$ is set so as to fall within this range, if there is a telop area in which k is around 0.2, it is possible to detect it.
Moreover, supposedly, when k is 0.4 and substitute k=0.4 input into the Equation (22) similarly, the conditions of
[Equation 24]

$$0.833 < \alpha < 1.25 \quad \text{...Equation (24)}$$

is obtained. That is, when trying to deal with up to the case where a wider telop area exists, it is found that the possible range of the constant $\alpha$ is narrowed.

As describe above, by assuming a value of the height k of the telop area, it is possible to determine the possible range of the constant $\alpha$. The constant $\alpha$ may be decided in accordance with the possible range of the constant $\alpha$ obtained from k which is determined from tendency of the height k of the telop area shown by analyzing an actual video.

When the constant $\alpha$ is decided and an average deviation M is obtained by the Equation (15), it is possible to determine a value of the threshold T from the Equation (16). Here, it is necessary to notice that the average deviation M is calculated from a detected motion vector. That is, depending on the condition of the detected motion vector, namely, depending on the motion of an object in the video, the value of the threshold T varies for every frame.

When the value of the threshold T is obtained, it is possible to determine whether or not the band-like area is a telop area by performing determination processing for the x value Vave_x (j) of the average vector of each band-like area Lj in accordance with the Equation (14).

Further, determination is performed for each band-like area Lj, and when it is decided that which band-like area is a telop area, it is possible to calculate an average of motion vectors in a motion detection block included in the telop area (Vt_x, Vt_y). That is, this is a telop vector.

Here, consideration is given to the assumption that all blocks in the telop area have a moving speed of the telop in the above-described description. Actually, all blocks in the telop area do not always have a motion vector having the same speed as the moving speed of the telop. As the number of blocks not including characters of a telop in a telop area becomes larger, for example, when characters of a telop exist sparsely in a telop area, a value of the average vector Vt_x of the telop area becomes closer to the value of the entire average vector Vave_x than the value of a true telop vector. In addition, at the same time, the average vector Vb_x of the area other than the telop also has the value close to the value of the entire average vector Vave_x. That is, both values of |Vb_x - Vave_x | and |Vt_x - Vave_x| also become small.

Accordingly, it is impossible to detect a telop area unless the value of the threshold T whose setting range is limited by the Equation (13) or the Equation (19) is also set to be small, that is, unless the value of $\alpha$ is set to be small. However, when the value of the threshold T is made small, the possibility that an area that is not a telop area is erroneously detected is increased.

Whereas, when a block not including characters of a telop in a telop area is few, for example, when characters exist densely in a telop, an operation almost according to the above-described consideration is expectable.

In this way, when actually applying, it is necessary to decide the constant $\alpha$ by taking consideration to what degree of sparsely-character telop is to be detected and to what degree of erroneous detection is allowed.

Note that, a telop has been detected by assuming that the telop is moved in a horizontal direction in the above-described embodiment, but it is possible to detect a telop moving in a vertical direction or an oblique direction using a similar method. In this case, a way of division of a band-like area may be set in accordance with a direction in which detection is to be made. For example, when it is desired to detect a telop that is moved in a vertical direction, the band-like area may be also set to a longwise area.

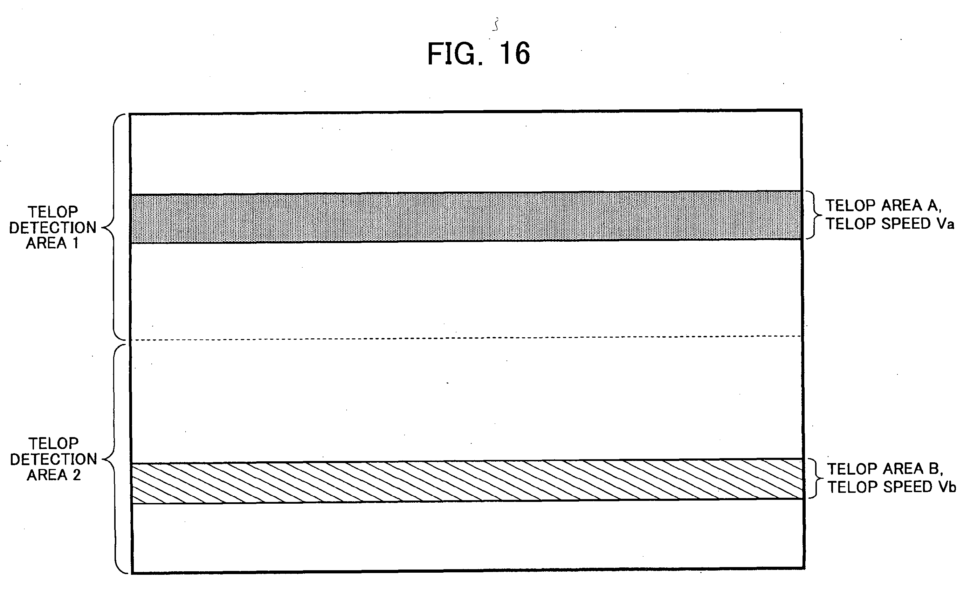

Next, a method for detecting telop information when a plurality of telops exist in a screen will be described. For example, as shown in Fig. 16, a screen is divided in two, an upper side and a lower side, as telop detection areas 1 and 2, and it is possible to detect two pieces of telop information that are telop area information A and telop vector information Va, and telop area information B and telop vector information Vb by executing the above-described method for detecting a telop in each area.

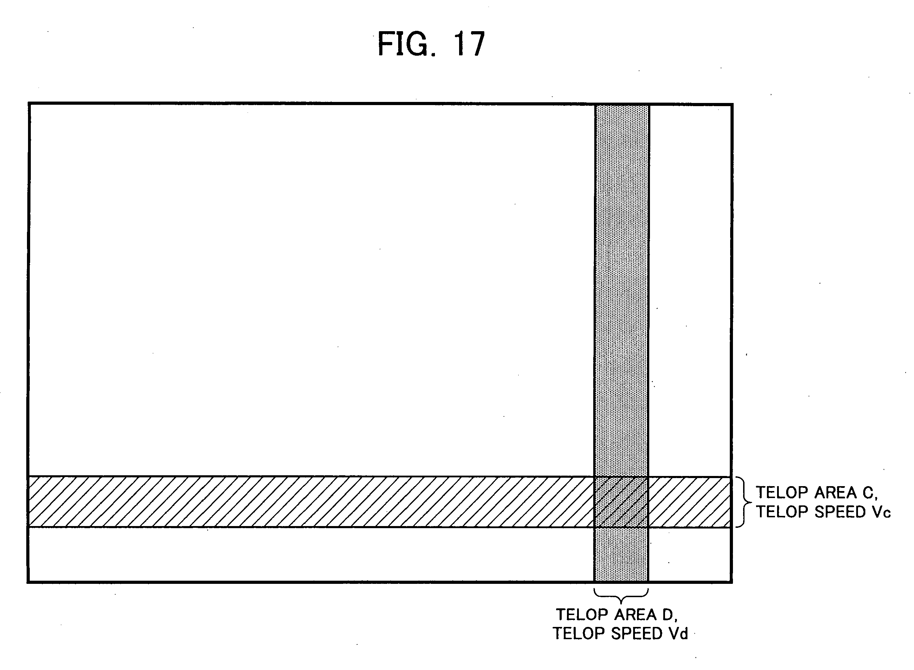

Alternatively, for example, as shown in Fig. 17, telop detection processing in a horizontal direction and telop detection processing in a vertical direction may be executed in parallel so as to detect two pieces of telop information that are telop area information C and telop vector information Vc in a horizontal direction, and telop area information D and telop vector information Vd in a vertical direction. Here, a common area to the telop area C and the telop area D corresponds to the case where the block in processing corresponds to a plurality of telop areas in the description of the above-described vector detecting means.

According to the present embodiment, it is possible to detect one or more pieces of telop information according to the procedure described above. The processing using detected telop information is as described above.

Note that, the above-described telop information detecting means is one of examples, and it is needless to say that it is possible to apply a telop information detecting means which is structured by employing other means to the method for detecting a motion vector and the method for generating an interpolation image of the present invention.

Here, it is necessary to note that a motion vector of each motion detection block stored in the vector memory 4 is used as input to the telop information detecting portion 5. The motion vector of each motion detection block stored in the vector memory 4 is a motion vector detection result in the last frame. That is, processing of the telop information detecting portion 5 is performed using the motion vector detection result in the last frame. Since a telop generally exists at the same position in a plurality of frames, it will not be a big problem when the motion vector detection result in the last frame is used as described above.

As described above, in the method for detecting a motion vector according to the present embodiment, a telop area and a telop vector are detected as a feature amount of a telop, and the obtained result is reflected in selection of an initial displacement vector and calculation of a motion vector to control motion compensation processing, whereby it is possible to detect a motion vector of a telop area more accurately, and as a result, it is possible to improve image quality of a telop area.

Meanwhile, there is a case where the correlation between continuous frames is interrupted in an input image signal due to scene change or the like. In this case, making reference to the motion vector detection result in the last frame stored in the vector memory 4 causes erroneous detection of a motion vector to the contrary. Therefore, when the correlation between continuous frames is interrupted due to scene change or the like, a method for resetting a motion vector detection result in previous frames has been conventionally proposed (for example, Japanese Laid-Open Patent Publication No. 2000-333134).

However, in the case of an input image signal which a scrolling telop is superimposed on an image in which scene change exists, when the reset processing as described above is performed, a motion vector of an area where the telop exists is also reset, and an interpolation image in which the telop scrolls smoothly can not be obtained. Accordingly, as to an area that is detected as a telop area, even when the scene change occurs in an input image signal, it is desired that motion compensation processing different from that for other areas is performed so as to obtain an interpolation image in which a telop scrolls smoothly.

More specifically, even when the scene change occurs, the reset processing for the motion vector detection result as described above is not performed for a telop area and the vector detection processing is continuously performed, whereby it is possible to obtain an interpolation image in which a telop scrolls smoothly even when the scene change occurs, and in addition, it is possible to prevent erroneous detection of a vector and to realize image quality in both of the telop area and other areas by performing the above-described reset processing for an area other than the telop area when the scene change occurs.

The image displaying device of the present invention is applicable not only to a liquid crystal display using a liquid crystal panel as a display panel, but to overall image displaying devices having display characteristics of a hold type such as an organic EL display and an electrophoretic display device. In addition, it is needless to say that an input image signal is not restricted to a television broadcast signal but may be various image signals such as an image signal reproduced from an external media and the like.

In addition, in the above-described description, although an example of the embodiments about the image processing device and the method thereof of the present invention have been described, the description also facilitates understanding of an image processing program that executes the present image processing method by a computer as a program, and a program recording medium in which the image processing program is recorded on a computer readable recording medium.

Furthermore, in the above-described embodiment, although the embodiment in which the image processing device of the present invention is integrally provided in the image displaying device has been described, this is not a restriction and it is needless to say that the image processing device of the present invention may be provided, for example, in a video output device such as various recording media reproducing devicees.

## Claims

1. An image displaying device having rate converting means that converts and outputs the number of frames or fields of the input image signal to a display panel by interpolating an image signal which motion compensation processing has been executed between frames or fields of an input image signal, wherein

   a detecting means for detecting feature amount (s) of one or more telops included in the input image signal is provided and
   the motion compensation processing in the rate converting means is controlled based on the detected feature amount (s) of one or more telops.

**2.** The image displaying device as defined in claim 1, wherein
the feature amount (s) of one or more telops is the area (s) of one or more telops moving in a predetermined direction.

**3.** The image displaying device as defined in claim 2, wherein
the detecting means divides a screen into a plurality of areas, obtains an average deviation of an average vector for each area, and detects an area in which a distance between the average vector for each area and an average vector of an entire screen is larger than the threshold which is obtained by multiplying the average deviation by a predetermined coefficient as a telop area.

**4.** The image displaying device as defined in claim 2 or 3, wherein
different motion compensation processing is performed for the detected telop area and for other areas.

**5.** The image displaying device as defined in claim 2 or 3, wherein
motion compensation processing is performed only for the detected area(s) of one or more telops.

**6.** The image displaying device as defined in claim 5, wherein
an image signal of a frame or a field of the input image signal is inserted between the frames or the fields of the signal for an area other than the detected area (s) of one or more telops.

**7.** The image displaying device as defined in claim 5, wherein
an image signal to which linear interpolation processing has been executed is inserted between frames or fields of the input image signal for an area other than the detected area(s) of one or more telops.

**8.** The image displaying device as defined in claim 6 or 7, wherein
filter processing is performed for a border part between the detected area(s) of one or more telops and other areas.

**9.** The image displaying device as defined in claim 1, wherein
the feature amount (s) of one or more telops is (are) moving speed(s)/direction(s) of one or more telops moving in a predetermined direction.

**10.** The image displaying device as defined in claim 9, wherein the detecting means divides a screen into a plurality of areas, obtains an average deviation of an average vector for each area, detects an area in which a distance between the average vector for each area and an average vector of an entire screen is larger than the threshold which is obtained by multiplying the average deviation by a predetermined coefficient as a telop area, obtains an average vector of vectors in the detected telop area and detects it as a moving speed/direction of the telop.

**11.** The image displaying device as defined in claim 9 or 10, wherein
the motion compensation processing is performed using the detected moving speed(s)/direction(s) of one or more telops.

**12.** The image displaying device as defined in claim 1, wherein
the feature amount(s) of one or more telops is area(s) and moving speed(s)/direction(s) of one or more telops moving in a predetermined direction.

**13.** The image displaying device as defined in claim 12, wherein
the detecting means divides a screen into a plurality of areas, obtains an average deviation of an average vector for each area, detects an area in which a distance between the average vector for each area and an average vector of an entire screen is larger than the threshold which is obtained by multiplying the average deviation by a predetermined coefficient as a telop area, obtains an average vector of vectors in the detected telop area and detects it as a moving speed/direction of the telop.

**14.** The image displaying device as defined in claim 12 or 13, wherein
the motion compensation processing is performed using the detected moving speed(s) /direction(s) of the telop(s) for the detected area(s) of one or more telops.

**15.** The image displaying device as defined in any one of claims 12 through 14, wherein
different motion compensation processing is performed for the detected area(s) of one or more telops and for other areas.

**16.** The image displaying device as defined in any one of claims 12 through 14, wherein
motion compensation processing is performed only for the detected area(s) of one or more telops.

**17.** The image displaying device as defined in claim 16, wherein
an image signal of a frame or a field of the input image signal is inserted between the frames or the fields of the
signal for an area other than the detected area (s) of one or more telops.

**18.** The image displaying device as defined in claim 16, wherein
an image signal to which linear interpolation processing has been executed is inserted between frames or fields of
the input image signal for an area other than the detected area (s) of one or more telops.

**19.** The image displaying device as defined in any one of claims 16 through 18, wherein
filter processing is performed for a border part between the detected area(s) of one or more telops and other areas.

**20.** An image displaying device having rate converting means that converts and outputs the number of frames or fields
of the input image signal to a display panel by interpolating an image signal which motion compensation processing
has been executed between frames or fields of an input image signal, wherein
the rate converting means comprises a motion vector detecting portion that detects a motion vector that shows a
size and a direction of motion between input image signals separated by at least one frame or one field or more for
each block by dividing the frames or the fields of the input image signal into a plurality of blocks of a predetermined
fixed size, and
the motion vector detecting portion has a storage portion that stores a motion vector detected for each block by an
amount for at least one frame or one field,
a telop information detecting portion that detects the feature amount(s) of one or more telops included in the input
image signal using a motion vector stored in the storage portion,
an initial displacement vector selecting portion that selects a motion vector having a most appropriate value for
motion of a block to be detected as an initial displacement vector of the block to be detected among candidate vector
groups read from motion vectors stored in the storage portion using the feature amount (s) of one or more telops
detected by the telop information detecting portion, and
a motion vector calculating portion that obtains and outputs a motion vector of the block to be detected by performing
predetermined calculation in which the feature amounts of the telops detected by the telop information detecting
portion are used and the initial displacement vector selected by the initial displacement vector selecting portion is
determined as a starting point and stores it in the storage portion.

**21.** The image displaying device as defined in claim 20, wherein
the initial displacement vector selecting portion performs different processing for the area(s) of one or more telops
detected by the telop information detecting portion and for other areas.

**22.** The image displaying device as defined in claim 21, wherein
the initial displacement vector selecting portion preferentially selects a candidate vector close to an average vector
of an entire screen in an area other than the area(s) of one or more telops detected by the telop information detecting
portion.

**23.** The image displaying device as defined in claim 21, wherein
the initial displacement vector selecting portion preferentially selects a candidate vector close to 0 vector in an area
other than the area(s) one or more telops detected by the telop information detecting portion.

**24.** The image displaying device as defined in claim 20, wherein
the initial displacement vector selecting portion adds and processes the motion vector(s) of one or more telops
detected by the telop information detecting portion to the candidate vector.

**25.** The image displaying device as defined in claim 24, wherein
the initial displacement vector selecting portion adds and processes the motion vector(s) of one or more telops
detected by the telop information detecting portion to the candidate vector for a block that corresponds to the area
(s) of one or more telops detected by the telop information detecting portion.

**26.** The image displaying device as defined in claim 24 or 25, wherein
the initial displacement vector selecting portion performs weighting so that the motion vector (s) of one or more telops can be easily selected among the candidate vectors in the area(s) of one or more telops detected by the telop information detecting portion to perform selection processing of an initial displacement vector.

27. The image displaying device as defined in claim 20, wherein
the motion vector calculating portion changes a calculation method so that a vector in the same direction as a direction of the motion vector(s) of one or more telops detected by the telop information detecting portion is obtained for a block that corresponds to the area (s) of one or more telops detected by the telop information detecting portion.

28. An image displaying method having a rate converting step for converting the number of frames or fields of the input image signal by interpolating an image signal which motion compensation processing has been executed between frames or fields of an input image signal, wherein
a detection step for detecting the feature amount (s) of one or more telops included in the input image signal is included and
the motion compensation processing at the rate converting step is controlled based on the detected feature amount (s) of one or more telops.

29. An image displaying method having a rate converting step for converting the number of frames or fields of the input image signal by interpolating an image signal which motion compensation processing has been executed between frames or fields of an input image signal, wherein
the rate converting step comprises a motion vector detecting step for detecting a motion vector that shows a size and a direction of motion between input image signals separated by at least one frame or more or one field or more for each block by dividing the frames or the fields of the input image signal into a plurality of blocks of a predetermined fixed size, and
the motion vector detecting step comprises a storing step for storing a motion vector detected for each block by an amount of at least for one frame or one field,
a telop information detecting step for detecting the feature amount(s) of one or more telops included in the input image signal by using the stored motion vector,
an initial displacement vector selecting step for selecting a motion vector having a most appropriate value for motion of a block to be detected as an initial displacement vector of the block to be detected among candidate vector groups read from motion vectors stored at the storing step by using the detected feature amount(s) of one or more telops, and
a motion vector calculating step for obtaining and outputting a motion vector of the block to be detected by performing predetermined calculation in which the detected feature amount(s) of the telops is(are) used and the initial displacement vector selected at the initial displacement vector selecting step is determined as a starting point.

30. An image processing device having rate converting means that interpolates an image signal which motion compensation processing has been executed between frames or fields of an input image signal to convert and output the number of frames or fields of the input image signal, wherein
a detecting means that detects the feature amount(s) of one or more telops included in the input image signal is provided and
the motion compensation processing in the rate converting means is controlled based on the detected feature amount (s) of one or more telops.

31. An image processing device having rate converting means that converts and outputs the number of frames or fields of the input image signal by interpolating an image signal which motion compensation processing has been executed between frames or fields of an input image signal, wherein
the rate converting means comprises a motion vector detecting portion that detects a motion vector that shows a size and a direction of motion in input image signals separated by at least one frame or one field or more for each block by dividing the frames or the fields of the input image signal into a plurality of blocks of a predetermined fixed size, and
the motion vector detecting portion comprises a storage portion that stores a motion vector detected for each block by an amount of at least for one frame or one field,
a telop information detecting portion that detects the feature amount(s) of one or more telops included in the input image signal using a motion vector stored in the storage portion,
an initial displacement vector selecting portion that selects a motion vector having a most appropriate value for motion of a block to be detected as an initial displacement vector of the block to be detected among candidate vector groups read from a motion vector stored in the storage portion using the feature amount (s) of one or more telops detected by the telop information detecting portion, and
a motion vector calculating portion that obtains and outputs a motion vector of the block to be detected and stores it in the storage portion by performing predetermined calculation in which the feature amounts of the telops detected by the telop information detecting portion are used and the initial displacement vector selected by the initial displacement vector selecting portion is determined as a starting point.

32. An image processing method having a rate converting step for converting the number of frames or fields of the input image signal by interpolating an image signal which motion compensation processing has been executed between frames or fields of an input image signal, wherein
a detection step for detecting the feature amount(s) of one or more telops included in the input image signal is included and
the motion compensation processing at the rate converting step is controlled based on the detected feature amount (s) of one or more telops.

33. An image processing method having a rate converting step for converting the number of frames or fields of the input image signal by interpolating an image signal which motion compensation processing has been executed between frames or fields of an input image signal, wherein
the rate converting step comprises a motion vector detecting step for detecting a motion vector that shows a size and a direction of motion between input image signals separated by at least one frame or more or one field or more for each block by dividing the frames or the fields of the input image signal into a plurality of blocks of a predetermined fixed size, and
the motion vector detecting step comprises a storing step for storing a motion vector detected for each block by an amount of at least for one frame or one field,
a telop information detecting step for detecting the feature amount(s) of one or more telops included in the input image signal by using the stored motion vector,
an initial displacement vector selecting step for selecting a motion vector having a most appropriate value for motion of a block to be detected as an initial displacement vector of the block to be detected among candidate vector groups read from motion vectors stored at the storing step by using the detected feature amount(s) of one or more telops, and
a motion vector calculating step for obtaining and outputting a motion vector of the block to be detected by performing predetermined calculation in which the detected feature amount(s) of the telops is(are) used and the initial displacement vector selected at the initial displacement vector selecting step is determined as a starting point.

# FIG. 1

# FIG. 2

1/60 SECOND

FRAME    #1        #2        #3        #4        #5        #6

ORIGINAL IMAGE
(60 FRAMES PER SECOND)

TIME

IMAGE AFTER CONVERTING
THE NUMBER OF FRAMES
(120 FRAMES PER SECOND)

TIME

1/120 SECOND

:IMAGE GENERATED BY INTERPOLATION

EP 2 077 663 A1

# FIG. 3

1/60 SECOND

FRAME #1

105

106

107

FRAME #2

# FIG. 4

# FIG. 5

TELOP VECTOR
INFORMATION

CANDIDATE
VECTOR GROUP

TELOP AREA
INFORMATION

TELOP VECTOR
ADDITION
DETERMINING
PORTION     2e

. . .     . . .

COORDINATE
CONVERTING
PORTION

. . .

COORDINATE
CONVERTING
PORTION

. . . .

COORDINATE
CONVERTING
PORTION

PREVIOUS FRAME     2a

SUBTRACTING
PORTION

. . .

SUBTRACTING
PORTION

. . . .

SUBTRACTING
PORTION

CURRENT FRAME     2b

ABSOLUTE
VALUE
ACCUMULATING
PORTION

. . .

ABSOLUTE
VALUE
ACCUMULATING
PORTION

. . . .

ABSOLUTE
VALUE
ACCUMULATING
PORTION

2c

SELECTING
PORTION     2d

2

INITIAL
DISPLACEMENT
VECTOR

# FIG. 6

PREVIOUS FRAME    CURRENT FRAME

CANDIDATE
VECTOR GROUP

2a  2b  2c  2d  2

COORDINATE
CONVERTING
PORTION

SUBTRACTING
PORTION

ABSOLUTE
VALUE
ACCUMULATING
PORTION

COORDINATE
CONVERTING
PORTION

SUBTRACTING
PORTION

ABSOLUTE
VALUE
ACCUMULATING
PORTION

SELECTING
PORTION

INITIAL
DISPLACEMENT
VECTOR

TELOP AREA
INFORMATION

EP 2 077 663 A1

## FIG. 7

EP 2 077 663 A1

# FIG. 8

V : DETECTION MOTION VECTOR
$V_0$ : INITIAL DISPLACEMENT VECTOR
$V_1$ : FIRST DISPLACEMENT AMOUNT
$V_2$ : SECOND DISPLACEMENT AMOUNT

# FIG. 9

$(m1+\alpha 0, n1+\beta 0)$

$(m1, n1)$

PREVIOUS FRAME

CURRENT FRAME

V

1 FRAME

# FIG. 10

EP 2 077 663 A1

## FIG. 11

TELOP
EXISTENT
AREA

# FIG. 12

| | | |
|---|---|---|
| 1 | L1 | $(\mathrm{Vave\_x}(1),\ \mathrm{Vave\_y}(1))$ |
| 2 | L2 | $(\mathrm{Vave\_x}(2),\ \mathrm{Vave\_y}(2))$ |
| ⋮ | ⋮ | ⋮ |
| j | Lj | $(\mathrm{Vave\_x}(j),\ \mathrm{Vave\_y}(j))$ |
| ⋮ | ⋮ | ⋮ |
| n | Ln | $(\mathrm{Vave\_x}(n),\ \mathrm{Vave\_y}(n))$ |

$(\mathrm{Vave\_x},\ \mathrm{Vave\_y})$

EP 2 077 663 A1

EP 2 077 663 A1

## FIG. 13

AREA OTHER
THAN TELOP: 1−k

(Vb_x, Vb_y)

CDEFG abcdefg HIJKLMN hijklmn OP

TELOP
EXISTENT
AREA: k

(Vt_x, Vt_y)

# FIG. 14

CASE OF Vb_x < Vt_x

Vb_x    Vave_x                Vt_x

k    :    1−k

# FIG. 15

CASE OF Vt_x < Vb_x

Vt_x              Vave_x    Vb_x

1−k    :    k

# FIG. 16

EP 2 077 663 A1

TELOP DETECTION AREA 1

TELOP AREA A, TELOP SPEED Va

TELOP DETECTION AREA 2

TELOP AREA B, TELOP SPEED Vb

# FIG. 17

TELOP AREA C,
TELOP SPEED Vc

TELOP AREA D,
TELOP SPEED Vd

EP 2 077 663 A1

**INTERNATIONAL SEARCH REPORT**

International application No.

PCT/JP2007/051914

A. CLASSIFICATION OF SUBJECT MATTER
*H04N7/01*(2006.01)i, *G09G3/20*(2006.01)i, *G09G3/36*(2006.01)i, *G09G5/00* (2006.01)i, *G09G5/391*(2006.01)i, *H04N5/66*(2006.01)i

According to International Patent Classification (IPC) or to both national classification and IPC

B. FIELDS SEARCHED

Minimum documentation searched (classification system followed by classification symbols)
H04N7/01, G09G3/20, G09G3/36, G09G5/00, G09G5/391, H04N5/66, H04N7/26-7/68

Documentation searched other than minimum documentation to the extent that such documents are included in the fields searched
Jitsuyo Shinan Koho          1922-1996     Jitsuyo Shinan Toroku Koho    1996-2007
Kokai Jitsuyo Shinan Koho    1971-2007     Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-177940 A  (Hitachi, Ltd.), 02 July, 1999 (02.07.99), | 1,2,4-8,28, 30,32 |
| Y | Par. Nos. [0077] to [0085], [0107], [0145], [0189] to [0192]; Figs. 10, 48 | 9,11,12, 14-19 |
| A | & EP 883298 A2 | 3,10,13, 20-27,29,31, 33 |
| Y | JP 2000-244929 A  (Toshiba Corp.), 08 September, 2000 (08.09.00), Par. Nos. [0078], [0079]; Fig. 8 (Family: none) | 9,11,12, 14-19 |

[X] Further documents are listed in the continuation of Box C.          [ ] See patent family annex.

| | |
|---|---|
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    01 May, 2007 (01.05.07) | Date of mailing of the international search report<br>    15 May, 2007 (15.05.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/051914

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2004-312680 A (Samsung Electronics Co., Ltd.), 04 November, 2004 (04.11.04), Full text; all drawings & US 2004/101047 A1 & EP 1422929 A2 | 1-33 |
| A | JP 2006-217066 A (Sharp Corp.), 17 August, 2006 (17.08.06), Full text; all drawings (Family: none) | 20-27,29,31, 33 |
| A | JP 2006-31597 A (Kabushiki Kaisha Shibasoku), 02 February, 2006 (02.02.06), Full text; all drawings (Family: none) | 20-27,29,31, 33 |
| A | JP 4-78286 A (Oki Electric Industry Co., Ltd.), 12 March, 1992 (12.03.92), Full text; all drawings (Family: none) | 20-27,29,31, 33 |
| A | JP 3295437 B2 (Nippon Hoso Kyokai), 24 June, 2002 (24.06.02), Full text; all drawings (Family: none) | 1-33 |

Form PCT/ISA/210 (continuation of second sheet) (April 2005)

**INTERNATIONAL SEARCH REPORT**

International application No.

PCT/JP2007/051914

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
JP 11-177940 A (Hitachi, Ltd.), 02 July, 1999 (02.07.99), describes that whether moving correction processing is carried out or not is controlled depending on whether it is in a character scroll region or not, correction frame interpolation processing is carried out only for the character scroll region and the present frame is interpolated in other regions to convert the number of frames (see paragraphs [0077[-[0085] and [0189]-[0192], Figs. 10, 48, etc. ), and the invention in claim 1 has no special technical feature. Thus, since the inventions in claims 1-19, 28, 30 and 32, and the inventions in claims 20-27, 29, 31 and 33 have no technical relationship to include
(Continued to the extra sheet.)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

Form PCT/ISA/210 (continuation of first sheet (2)) (April 2005)

**INTERNATIONAL SEARCH REPORT**

International application No.

PCT/JP2007/051914

Continuation of Box No.III of continuation of first sheet(2)

one or more of the same or corresponding special technical features,
they are deemed not to be related to define a single general inventive
concept.

Form PCT/ISA/210 (extra sheet) (April 2005)

**EP 2 077 663 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3295437 B
- JP 55162683 A
- JP 55162684 A
- JP 60158786 A
- JP 62206980 A
- JP 6217266 A
- JP 2000333134 A

**Non-patent literature cited in the description**

- **Shuichi Ishiguro ; Taiichiro Kurita.** *Technical report of The Institute of Electronics, Information and Communication Engineers,* June 1996, 19-26
- television system conversion. *Tatsuro Yamauchi, Journal of the Institute of Television Engineers of Japan,* 1991, vol. 45 (12), 1534-1543